# EUROPEAN PATENT SPECIFICATION

(11) **EP 3 347 309 B1**
(45) Date of publication and mention of the grant of the patent: **20.07.2022**
(21) Application number: 16794402.4
(22) Date of filing: 12.09.2016
(51) Int. Cl.: C01G 5/00

(54) **METHODS FOR OBTAINING SALTS OF SILVER(II) AND HYDRATES THEREOF, PRODUCTS OBTAINED BY THE METHODS AND USE OF THE SAME**
HERSTELLUNGSVERFAHREN FÜR SILBER (II) SALZE UND DEREN HYDRATE, D/ARAUS HERGESTELLTE PRODUKTE UND UND IHRE ANWENDUNGEN
MÉTHODES POUR L'OBTENSION DE SELS D'ARGENT (II) ET LEURS HYDRATES, PRODUITS OBTENUS PAR LESDITES MÉTHODES ET UTILISATIONS DESDITS PRODUITS

(30) Priority: 11.09.2015 PL 41392215; 04.02.2016 PL 41602616; 25.08.2016 PL 41846516; 09.09.2016 PL 41862916; 09.09.2016 PL 41863016
(43) Date of publication of application: 18.07.2018
(73) Proprietor: Uniwersytet Warszawski, 00-927 Warszawa (PL)
(72) Inventor: LESZCZYNSKI, Piotr, 02-620 Warszawa (PL); BUDNIAK, Adam Krzysztof, 71-215 Szczecin (PL); ADAMCZYK, Wojciech Marek, 37-450 Stalowa Wola (PL); GAWRACZYNSKI, Jakub Henryk, 02-505 Warszawa (PL); GILEWSKI, Tomasz Edward, 01-233 Warszawa (PL); POLCZYNSKI, Piotr, Grodzisk Mazowiecki (PL); JURCZAKOWSKI, Rafal Robert, 05-840 Brwinow (PL); GROCHALA, Wojciech Rafal, 01-357 Warszawa (PL); MAZEJ, Zoran, 1292 Ig (SI)
(74) Representative: JD&P Patent Attorneys Joanna Dargiewicz & Partners
(86) International application number: PCT/IB2016/001280
(87) International publication number: WO 2017/042624

(56) References cited:
- PIOTR POLCZYNSKI ET AL: "Strong and Long-Lived Free-Radical Oxidizer Based on Silver(II). Mechanism of Ag(I) Electrooxidation in Concentrated H 2 SO 4", JOURNAL OF PHYSICAL CHEMISTRY C, vol. 117, no. 40, 10 October 2013 (2013-10-10), pages 20689-20696, XP055330696, US ISSN: 1932-7447, DOI: 10.1021/jp406442j
- Anil Kumar: "Kinetics of Complexation and Oxidation of Ethanolamine and Diols by Silver( I I)l", J. Phys. Chem. J. Phys. Chem. J. Am. Lengel, R. K.; Freiser, B. S. J. Am. Chem. SOC. Chem. SOC, 1 January 1982 (1982-01-01), pages 1674-1678, XP055330699, Retrieved from the Internet: URL:http://pubs.acs.org/doi/abs/10.1021/j1 00206a037
- J. A. Mcmillan: "Higher Oxidation States of Silver.", Chemical Reviews, vol. 62, no. 1, 1 February 1962 (1962-02-01), pages 65-80, XP055719883, US ISSN: 0009-2665, DOI: 10.1021/cr60215a004
- P. C. Leung ET AL: "Synthesis and structural characterization of fluorosulfate derivatives of silver(II)", INORGANIC CHEMISTRY, vol. 17, no. 7, 1 July 1978 (1978-07-01), pages 1765-1772, XP055719889, EASTON, US ISSN: 0020-1669, DOI: 10.1021/ic50185a012
- Piotr Polczynski ET AL: "Stabilization and strong oxidizing properties of Ag(II) in a fluorine-free solvent", ChemmComm, vol. 49, 20 June 2013 (2013-06-20), pages 7480-7482, XP055720049, DOI: 10.1039/c3cc43072c

## Description

The present invention relates to a process for the electrochemical synthesis of the silver(II) salts of high purity, to the method of synthesis of silver(II) hydrates of high purity, to the products produced by these methods, and also to the use of the so obtained silver(II) compounds to modify the molecular structures of organic compounds, comprising isomerization processes (including cyclization and ring opening) dehydrogenation (including aromatization), cracking (breaking of C-C bonds) and coupling (formation of C-C bonds) of the molecules of organic compounds, allowing processing of these reactions in the simple one-pot synthesis (i.e., direct one-step synthesis). In some cases, modification reactions of organic compounds occur simultaneously or sequentially, resulting in many new products. A special case of use of silver(II) salts are the processes for treating wastes consisting of hydrocarbons, toxic hydrocarbons and their derivatives, or hazardous materials, such as Persistent Organic Pollutants, carcinogenic polyaromatic hydrocarbons, industrial wastes, wastes from nuclear industry, and other.

There is a need for a universal method for the synthesis of a silver(II) salts and for synthesis of silver(II) salts resistant to water in various physical states.

There is also a need for effective methods to modify the molecular structures of organic compounds, including isomerization, dehydrogenation, cracking and coupling of organic compounds in a simple synthesis reaction, which would result in breaking and/or the formation of new carbon-carbon bonds.

**Silver(II) salts.** Silver(II)-containing compounds are known. Due to the presence of silver atoms in the +2 oxidation state, these compounds have very strong oxidizing properties. The standard redox potential of the Ag(II)/Ag(I) couple is about 2 V versus the standard hydrogen electrode [A. J. Bard, R. Parsons, J. Jordan, "Standard potentials in Aqueous Solution ", Marcel Dekker INC., New York, Basel, 1985], and the formal potential can reach almost 3 V in an acid medium [Chem. Comm., 49 (2013) 7480].

Silver(II) compounds contain anions resistant to oxidation, typically fluorine-containing anions [Angew. Chem. Int. Ed., 40 (2001) 2742]. During their decomposition these compounds often release gaseous fluorine or hydrogen fluoride, which are a threat to the health and life of humans and animals. Silver(II) salts derived from inorganic acids are known. For example: silver(II) fluorosulphate(VI), Ag(SO₃F)₂ [Eur. J. Inorg. Chem., 16 (2011) 2499] silver(I/II) difluoroortophosphate(V), Ag₉(PO₂F₂)₁₄ [*Dalton. Trans., 44* (**2015**) 19478], silver(II) trifluoromethanesulfonate (triflate), Ag(SO₃CF₃)₂ [CrystEngComm, 13 (2011) 6871], silver(II) fluoride, AgF₂ [J. Phys. Chem. Solids, 32 (1971) 1641] silver(II) hexafluoroantimonate(V), Ag(SbF₆)₂ [J. Chem. Soc., Dalton Trans., (1987) 2379] silver(I/II) hexafluoroantimonate(V), Ag₃(SbF₆)₄ [Dalton. Trans., 44 (2015) 10957], and others. The preparation of silver(II) perchlorate, Ag(ClO₄)₂, and silver(II) nitrate(V), Ag(NO₃)₂, by metathesis has also been postulated [P. J. Malinowski, "Synthesis and characterization of some oxygen derivatives of divalent silver", PhD thesis, University of Warsaw, 2012**].**

The only inorganic divalent silver compound, which does not contain fluorine atoms is silver(II) sulphate(VI) (Angew. Chem. Int. Ed., 49 (2010) 1683) which is routinely used in chemical laboratories. During decomposition of silver(II) sulfate(VI) no fluorine, hydrogen fluoride or other toxic chemicals are released. The product of reduction of silver(II) sulphate is silver(I) hydrogen sulphate(VI), or less likely silver(I) bisulphate(VI). Decomposition products of silver(II) sulphate are harmless to health. Silver(II) sulphate(VI) is antiferromagnetic semiconducting material with a narrow band gap (1.4±0.3 eV), with the highest absolute value of the magnetic coupling constant (217 K) among the known transition metals sulphates [Angew. Chem. Int. Ed., 49 (2010) 1683], and the lowest temperature of the thermal decomposition of known metal sulphates [Chem. Eur. J., 17 (2011) 10524].

There are two known methods of chemical synthesis of silver(II) sulphate(VI) [Angew. Chem. Int. Ed., 49 (2010) 1683]. Both methods involve the chemical modification of precursors containing silver(II) atoms. The first method is based on the metathetical reaction between Ag(SbF₆)₂ and K₂SO₄ in a solution of anhydrous hydrogen fluoride (reaction R.1):

Ag(SbF₆)₂ (aHF) + K₂SO₄ (aHF) → AgSO₄↓ + 2KSbF₆ (aHF) (R.1)

The product of this reaction consists of silver(II) sulphate(VI) contaminated with significant amounts of KSbF₆, which cannot be removed from the main product. Silver(II) sulphate(VI) obtained by this method is not suitable for any further chemical applications due to the presence of impurities.

A second known method of synthesis is a displacement reaction taking place between AgF₂ and the involatile acid H₂SO₄ in a solution of anhydrous sulfuric(VI) acid (reaction R.2):

AgF₂ + H₂SO₄ → AgSO₄↓ + 2 HF↑ (R.2)

The product of this reaction is silver(II) sulphate(VI) contaminated with silver(I) compounds such as Ag₂S₂O₇ and Ag₂SO₄. As in the case of previous synthetical method of silver(II) sulphate(VI), impurities cannot be completely removed. However, it should be noted that the purity of silver(II) sulphate(VI) obtained by the reaction between AgF₂ and H₂SO₄ is much higher than the purity of the product of reaction between Ag(SbF₆)₂ and K₂SO₄.

Both previously known synthetic methods of preparation of silver(II) sulphate do not allow to obtain the product in a pure form. The solid product itself is of very low crystallinity. Additionally, a significant disadvantage of the previously described methods, is the need to use hazardous elemental fluorine at the stage of the preparations of precursors [AgF₂ and Ag(SbF₆)₂]. The undoubted disadvantage of both methods of synthesis of AgSO₄ is generation of wastes that contain fluorine, which wastes are difficult to dispose.

Process of electrooxidation of silver(I) salts in concentrated H2SO4 (96%) leading to solvated silver(II) radical species is known [J. Phvs. Chem. C, 117 (2013) 206891. The process is carried out using three electrode setup with FTO working electrode, platinum counter electrode and saturated silver(I) sulfate reference electrode (SSE). Generation of soluble silver(II) radical species involves using highly oxidative conditions above 1.8 V vs. SSE. Presence of silver(II) species was confirmed using ESR method. Activation energy of the electrode process was determined. Half-life of silver(II) radical species was determined to be c.a. 10s. Although generation of silver(II) radical species was confirmed, no silver(II) salt was obtained in the process.

Because of very strong oxidizing properties, all currently known silver(II) compounds must be stored in an anhydrous protective atmosphere in vessels made of perfluorinated synthetic materials and in some cases in quartz. Otherwise degradation of silver(II) compounds to the corresponding silver(I) compounds or to mixed-valence silver compounds [Ag(I/II)] occurs [P. J. Malinowski, "Synthesis and characterization of some oxygen derivatives of divalent silver", PhD thesis, University of Warsaw, 2012**].** Therefore, any operations and uses involving the employment of silver(II) compounds must be carried out in an anhydrous protective atmosphere. This increases the costs of operation and significantly reduces the potential fields of application of silver(II) compounds.

There is an unmet demand for a universal method for the synthesis of silver(II) salts which would give pure product free from impurities. The synthesis process should not require the use of precursors derived from the use of hazardous chemical reagents, and should not generate wastes that are difficult to dispose. The invention provides such a method, and eliminates the disadvantages of the prior art.

There is an unmet demand for a silver(II) compound, which would be stable in contact with water, water vapor and ice. At the same time the synthesis method of such salt should be cheap and simple. The invention provides such a method, and eliminaties the disadvantages of previously known methods.

**Processes of modifying of the molecular structures of organic compounds.** In organic synthesis there are often difficulties in a selective modification of the molecular structures of organic compounds. These problems are particularly known for organic compounds of low reactivity such as light hydrocarbons (below C10), and aromatic hydrocarbons and their derivatives. These problems are overcome by using complex synthetic procedures, which frequently require preliminary functionalization of starting compounds, and multi-step reactions using a catalyst under conditions of elevated temperature and pressure.

The basic processes used in organic synthesis can be divided into processes of isomerization (including cyclization and ring opening), dehydrogenation (including aromatization), cracking (breaking of carbon-carbon bonds) and coupling (formation of carbon-carbon bonds).

The isomerization reactions of organic compounds (reaction R.3) create molecules with the same empirical formula, but with a different construction (structure) with different molecular and physical-chemical properties:

CₓH_{y}E_{z} → iso-CₓH_{y}E_{z} (R.3)

where C is carbon, H - hydrogen, and E is any atom of another type or a mixture of such atoms in appropriate stoichiometric ratio (functional group), and x, y and z are integer numbers. Special cases of isomerization reactions are cyclization (formation of carbon ring) and decyclization (opening of the carbon ring).

The dehydrogenation reaction (dehydrogenation) of organic compounds (reaction R.4) involves the cleavage of the molecules and hydrogen [H] evolution:

CₓH_{y}E_{z} → CₓH_{y-b} + b [H] (R.4)

It is the reaction opposite to hydrogenation. The dehydrogenation reactions are typically classified according to the type of bonds in the molecule from which the hydrogen is removed: >C(H)-C(H)<, >C(H)-N(H)-, and >C(H)-O(H), etc. As a result of elimination of two hydrogen atoms on two different carbon atoms linked together via a single bond, corresponding olefin (alkene >C=C< or alkyne -C=C-) is formed. This type of dehydrogenation is widely used in industry, especially in the dehydrogenation of paraffins. In the case of dehydrogenation of compounds of the type >C(H)-N(H)-, imine >C=N- or nitrile -C=N are formed, in the case of compounds of the type >C(H)-O(H) aldehyde or ketone >C=O are formed, etc. One specific case of dehydrogenation reaction are aromatization reactions. Dehydrogenation reactions of organic compounds with elimination of one hydrogen atom (formally by H°, H⁺ and H⁻) result in the formation of free radicals, carboanions or a carbocations, respectively.

The reaction of breaking C-C bonds (cracking) (reaction R.5) is the disruption of C-C bonds in the organic molecule to form two new molecules:

CₓH_{y}E_{z} → Cₓ₋ₐH_{y-b}E_{z-c} + CₐH_{b}E_{c} (R.5)

The most common type of bond cleavage is homolytic and it leads to the formation of two free radicals. Less likely bond cleavage is heterolytic which leads to the formation of ions. The ring-breaking (opening the carbon ring) is one particular example of the reactions involving breaking of C-C bonds.

The reaction of formation C-C bond (coupling) (reaction R.6) consists of creating C-C bonds between two molecules and formation of a new organic molecule:

Cₓ₋ₐH_{y-b}E_{z-c} + CₐH_{b}E_{c} → CₓH_{y}E_{z} (R.6)

It is the reverse reaction to the reaction where C-C bonds are broken. Cyclization reactions (formation of carbon ring) are a particular example of the reaction where C-C bonds are formed.

All types of organic molecules (i.e., uncharged molecules in singlet or triplet ground state, free radicals, carboanions, and carbocations, including carbodianions and carbodications with a suitable number of carbon atoms) may undergo the above-mentioned reactions of isomerization, dehydrogenation, breaking of C-C bonds and the formation of C-C bonds. In the course of chemical processes these reactions may generally take place selectively (individually), simultaneously (concurrently), or sequentially (one after another).

In literature there are numerous ways known how to carry out the isomerization reactions, dehydrogenations, breaking and formation of C-C bonds of organic compounds. All those methods are limited to compounds with a specific structure and are typically carried out in the presence of catalysts which also require special preparation. Some known procedures for the reaction of major importance in the petrochemical, chemical industry and pharmaceutical industry are listed below:
Isomerization of light alkanes (C5-C6) is known [Cent. Eur. J. Chem., 12 (2014) 1]. The isomerization of light paraffins (C5-C6) can be carried out in the gas phase, with AlF₃ doped Al₂O₃ as a catalyst, and at a temperature in the range of 360-440°C. The isomerization of light paraffins (C5-C6) can be carried out in the gas phase over a catalyst which is a zeolite Na₂Al₂Si₃O₁₀ doped with metallic Platinum at a temperature in the range of 250-300°C. Isomerization of light alkanes (C5-C6) can be carried out in the gas phase, with a catalyst ZrO₂/Zr(SO₄)₂ doped with platinum metal at a temperature in the range of 130-180°C. The isomerization of light paraffins (C5-C6) can be carried out in the gas phase, with a catalyst Al₂O₃/AlCl₃ doped with platinum metal at temperatures between 110-150°C.

Dehydrogenation of propane (C3) to propene is carried out in the gas phase, with a catalyst Cr₂O₃ doped with metallic platinum and tin, and at a temperature in the range 500-700°C [V. K. Arora, Propylene via CATOFIN propane dehydrogenation technology, McGraw-Hill, New York, 2004**].**

The catalytic dehydrogenation of aliphatic hydrocarbons is typically carried out with palladium or platinum deposited on aluminum oxide Al₂O₃ with concentration of 0.3-0.7 wt%. Process of catalytic dehydrogenation is usually run at temperature of 400-600 °C and leads to the formation of olefins [S. Matar L. F. Hatch Chemistry of Petrochemical Processes, Elsevier 2001**;** S. Matar, M. J. Mirbach, H. A. Tayim, Catalysis in petrochemical processes, Kluwer Academic Publisher, Dordrecht Holland 1989**].**

The catalytic dehydrogenation of propane in the presence of sulfur to hydrogen sulfide and propylene can be carried out using a catylyst of nickel and tungsten sulphide on Al₂O₃ at temperature not exceeding 350°C [US 2004/0092784 A1].

Thermal cracking is a decomposition reaction of long-chain aliphatic hydrocarbons connected with breaking of carbon-carbon bonds (C-C) at a temperature of 500-550°C and subsequent creations of C-C bonds, as a result of which a mixture of alkanes and alkenes with shorter chains are formed. During the cracking reactions, hydrocarbons are isomerized and often dehydrogenated to aromatics, that further condense to polycyclic aromatic hydrocarbons [Sami Matar and Lewis Hatch F., Chemistry of Petrochemical Processes, (Second Edition), Elsevier, 2001**].**

Cracking is catalyzed by liquid or solid Lewis acids and Brønsted superacids and it results in decomposition of long-chain aliphatic hydrocarbons where carbon-carbon (C-C) bonds are broken, extending over a wide temperature range from -78°C (liquid superacid, e.g., a mixture of HSO₃F-SbF₅) to 550°C (zeolites), where isomeric mixtures of short chain alkanes are formed (G. A. Olah, G. K. Surya Prakash, J. Sommer, A. Molnar, Superacid Chemistry, Wiley & Sons 2009**).**

Oxidation of ethanolamine, ethylene glocol and several other diols by silver(II) soluble species at basic pH = 8.5 is known [J. Phvs. Chem., 86 (1982) 16741. Soluble silver(II) hydroxide was generated in reaction of silver(I) cations with OH˙ radicals at basic pH. Silver(II) hydroxide was found to complex and further oxidise ethanolamine and other diols. However usage of silver(II) species to oxidise ethanolamine and several diols was interesting, no further reports showing acitivity of silver(II) species vs. orgnic compounds, and possible use of silver(II) compounds in organic synthesis were published.

Many methods dealing with coupling of organic compounds are known, such as reactions of: Wurtz, Pinakolinowa, Glaser, Ullmann, Gomberg-Bachmann, Gilman, Cadiota-Chodkiewicz, Castro-Stephens, Kumada, Heck, Sonogashira, Negishiego, Stille, Suzuki, McKillop, Hiyamy, Fukuyama, Liebeskind-Srogla, Miura. These reactions mostly do not allow the coupling of unsubstituted hydrocarbons. Only in Wurtz reaction or in the coupling of unsubstituted hydrocarbons (using VOF₃) there is no need for prior functionalization. However, there is only a small group of hydrocarbons or alkynes with terminal carbon-carbon triple bond (Wurtz reaction) and polycyclic aromatic compounds (reaction with VOF₃) which are suitable for this purpose. Coupling of other hydrocarbons requires prior functionalizing, which greatly complicates the process by adding additional synthetical steps, including, for example, obtaining of an organic halide, the need for a Grignard reagent, organozinc, organotin, organosilicon, or boric acid thioesters, etc. Often, the substrates required for carrying out the coupling reactions are unstable or difficult to obtain. Often, high temperatures (e.g., 200°C in Ulmann reaction) and a catalysts (e.g., palladium catalyst in reactions of Kumada, Heck, Sonogashira, Negishiego, Stille, Suzuki, Hiyamy, and Fukuyama Liebeskinda-Srogla) are required for coupling reaction, that increases the cost of the process. A common situation is the need for very reactive reagents (e.g., organo-zinc compounds), which hampers the process and increases the risk of environmental pollution. All known coupling reactions are limited either to homo-coupling or to cross-coupling. Most known coupling reactions are also limited to a specific type of hybridization of carbon atoms involved in the formation of carbon-carbon bonds.

The main disadvantages of the known methods of modifying the structures of molecules of organic compounds are:
- the need for elevated temperatures (e.g., catalytic cracking at high temperature, Ulmann reaction, Miura reaction, etc.)
- the need for expensive platinum or palladium or carcenogenic nickel (e.g., dehydrogenation catalyst, the Suzuki, Stille reaction, etc.),
- the need for very toxic compounds (e.g., McKillop reaction, Stille reaction, etc.), and/or highly corrosive superacids in the coupling reactions.
- multi-step reactions (e.g., reaction using Gilman reagent, Kumada reaction, Stille reaction, the Suzuki reaction Fukuyama; Liebeskind-Srogla reaction, etc.).
- restrictions related to the type of used reagents, or to the necessity of their prior functionalization (e.g.. Wurtz, Glaser, Ullmann reactions, etc.)
- the necessity of removing catalyst poisons in the catalytic processes (e.g., removal of sulfur compounds during the use of palladium catalysts)
- the need to periodically remove carbon deposits from the surface of catalysts (e.g., catalytic cracking).

There is an unmet need for a method of modifying the structures of molecules of organic compounds, including the reactions of isomerization, dehydrogenation, breaking and formation of C-C bonds in the molecules of organic compounds, which would run separately, simultaneously or sequentially for different types of hydrocarbons and other organic compounds without their prior functionalization, and without the requirement of elevated temperature, and the method should not be limited to one type of hybridization of carbon atoms involved in the formation of carbon-carbon bonds. The solution according to the present invention solves the problems and disadvantages of the previously known processes.

**Disposal of hazardous waste.** Disposal of waste and hazardous materials (such as Persistent Organic Pollutants, POPs) including carcinogenic polyaromatic hydrocarbons, aromatic polyhalogenated compounds, for example pcb, waste from nuclear industries) is an important technological issue. Previous utilizations of these methods include ozonolysis of industrial waste, the use of electrochemically generated oxidizing Ag(II) ions in nitric(V) acid [US5855763], the use of Co(III) and Ce(IV) [J. Apl. Electrochem. 25 (1995) 846], oxidation with monopersulphate KHSO₅ in the presence of ruthenium catalyst (ruthenium-containing phthalocyanine sulgonate) [Coordination Chem. Rev. 185 (1999) 385]. The disadvantage of methods using ozone is a risk of ignition and explosion of hydrocarbons and high toxicity of ozone. The disadvantage of methods using electrochemically generated ions, Co(III) and Ce(IV), is their high toxicity. Limitation of methods of disposing POPs while utilizing monopersulphates is the high cost ruthenium catalysts. A disadvantage of using of Ag(II) ions is the need to use corrosive auxiliary substances such as nitric acid.

There is an unmet need for disposal of hazardous substances, for the use of chemicals and equipment without the need for aggressive and expensive excipients and catalysts.

### Summary of the invention

A method of electrochemical synthesis of silver(II) salt characteristic in that the electrolysis of the silver(I) salt or a salt of silver(I) is conducted in the acid solution containing the same anion as electrolyzed salt, preferably oxoanion or oxofluoroanion with inorganic element in a high oxidation state, preferably non-metal such as C(IV), N(V), P(V), S(VI), Se(VI), Te(VI), CI(VII), Br(VII) and I(VII). During electrolysis, concentrated acid solution is used, preferably a solution with a concentration over 80%, most preferably in a concentration of greater than or equal to 95%, the acceptable contamination of water is an anhydride of the acid or other solvent forming a solution of the corresponding salt of silver(I) and the acid, optionally with the addition of electrolyte.

The electrolysis is carried out in a system comprising of least two electrodes: a working electrode and a counter electrode. As the working electrode is used an electrode made of a material with high chemical resistance to acid environment, and to cathodic and anodic polarization, preferably doped tin oxide ITO or FTO, doped boron nitride BDD, glassy carbon, graphite oxide, lead(IV) PbO₂, platinum, iridium, rhodium or ruthenium. The electrolysis is carried out at highly anodic potential, preferably at a potential higher than 2.0 V relative to a standard hydrogen electrode (NHE), most preferably at a potential higher than 2.5 V relative to a standard hydrogen electrode (NHE).

The electrolysis is carried out in an inert atmosphere, preferably under argon or nitrogen, preferably doped with sulfur(VI) hexafluoride. Electrolysis is performed at temperature providing a liquid state of the acid used and in the range of thermal stability of the electrolysis product, preferably at temperature from - 50°C to +150°C. The electrolysis is carried out in an acid solution containing an electrolyte, preferably salts of alkali metal, ammonium or phosphonium salt of the anion of the acid used in electrolysis.

The product is washed with a liquid electrolytic solution of the acid used in electrolysis, preferably distilled acid solution, whereas the acceptable contamination of the acid is water or acid anhydride. Washing the product is performed repeatedly, each time using a solution of the increasing water content.

According to the invention siver(II) salt is prepared by using a suitable silver(I) salt or silver(I) hydrogensalt is electrolysized in the acid solution of the same oxoanion that produce a silver(II) salt, in particular:
▪ silver(II) nitrate(V), or silver(I/II) nitrate(V) via the electrolysis of silver(I) nitrate(V), AgNO₃ in a solution of nitric(V) acid, HNO₃;
▪ silver(II) metaphosphate(V) or silver(I/II) metaphosphate(V) via the electrolysis of silver(I) metaphosphate(V), AgPO₃ in a solution of metaphosphoric acid (V) HPO₃;
▪ silver(II) orthophosphate(V) or silver (I/II) orthophosphate via the electrolysis of silver(I) orthophosphate(V), Ag₃PO₄, or silver(I) hydrogen orthophosphate(V), Ag₂HPO₄ or silver(I) dihydrogen phosphate(V), AgH₂PO₄ in a solution of phosphoric(V) acid H₃PO₄;
▪ silver(II) sulphate, silver(I/II) sulphate(VI) via the electrolysis of silver(I) sulphate(VI), Ag₂SO₄, or silver(I) hydrogen sulphate(VI), AgHSO₄ in a solution of sulphuric(VI) acid, H₂SO₄;
▪ silver(II) selenate(VI) or silver(I/II) selenate(VI) via the electrolysis of silver(I) selenate(VI), Ag₂SeO₄ in selenic(VI) acid, H₂SeO₄;
▪ silver(II) chlorate(VII) or silver(I/II) chlorate(VII) via the electrolysis of silver(I) chlorate(VII), AgClO₄ in a solution of perchloric(VII) acid, HClO₄;
▪ silver(II) bromate(VII) or silver(I/II) bromate via the electrolysis of silver(I) bromate(VII), AgBrO₄ in a solution of perbromic(VII) acid, HBrO₄;
▪ silver(II) iodate(VII) or silver (I/II) iodate(VII) via the electrolysis of silver(I) iodate(VII), AgIO₄ in a solution of iodic(VII) acid, HIO₄
▪ silver(II) trifluoroacetate or silver(I/II) trifluoroacetate via the electrolysis of silver(I) trifluoroacetate, AgCOOCF₃ in trifluoroacetic acid, CF₃COOH;
▪ silver(II) trifluoromethanosulfonate(VI) (triflate), or silver(I/II) trifluoromethanosulfonate(VI) (triflate), via the electrolysis of silver(I) trifluoromethanosulfonate(VI) (triflate), AgSO₃CF₃, in trifluoromethanosulfonic(VI) acid) (triflic axcid) HSO3CF₃;
▪ silver(II) perfluoro benzenesulfonate or silver(I/II) perfluoro benzenesulfonate via the electrolysis of silver(I) perfluoro benzenesulfonate, C₆F₅SO₃Ag in solution of perfluoro benzene sulfonic acid, C₆F₅SO₃H;
▪ silver(II) perfluoro naphthalenesulfonate or silver(I/II) perfluoro naphtalenesulfonate via the electrolysis of silver(I) perfluoro naphtalenesulfonate, C₁₀F₇SO₃Ag in acid solution of perfluoro naphtalenesulfonate, C₁₀F₇SO₃H;
▪ silver(II) methanesulfonate or silver(I/II) methanesulfonate via the electrolysis of silver(I) methanesulfonate AgSO₃HF₃, solution of methanesulfonic acid HSO₃CH₃;
▪ silver(II) benzenesulfonate or silver(I/II) benzenesulfonate via the electrolysis of silver(I) benzenesulfonate in a solution of benzenesulfonic acid, C₆H₅SO₃H;
▪ silver(II) naphthalenesulfonate or silver(I,II) naphtalenesulfonate via the electrolysis of silver(I) naphtalenesulfonate C₁₀H₇SO₃Ag in acid solution of naphtalene sulfonic acid, C₁₀H₇SO₃H;
▪ silver(II) salt of higher perfluorosulfonic and sulfonic acid type CₙF₂ₙ₊₁SO₃H, CₙH₂ₙ₊₁SO₃H, Nafion^{®} or derivatives thereof, or silver(I/II) salts of higher perfluorosulfonic and sulfonic acid type CₙF₂ₙ₊₁SO₃H, CₙH₂ₙ₊₁SO₃H, Nafion^{®}, or derivatives thereof, via the electrolysis of the silver(I) salts of higher perfluorosulfonic and sulfonic acid type CₙF₂ₙ₊₁SO₃H, CₙH₂ₙ₊₁SO₃H, Nafion^{®} or derivatives thereof, in higher perfluorosulfonic and sulfonic acid type solutions of CₙF₂ₙ₊₁SO₃H, CₙH₂ₙ₊₁SO₃H, Nafion^{®} or derivatives thereof;
▪ silver(II) salt of (CF₃)₂POOH or silver(I/II) salt of (CF₃)₂POOH via the electrolysis of the silver(I) salt of (CF₃)₂POOH, AgPOO(CF₃)₂, in acid solution of (CF₃)₂POOH.

According to the invention a silver(II) salt obtained by reacting a suitable silver(I) salt or by electrolysis of silver(I) hydrogensalt in the acid solution of the same oxofluoroanion that produced a silver(II) salt, in particular:
- silver(II) difluoro ortophosphate(V) or silver(I/II) difluoro ortophosphate(V) via the electrolysis of silver(I) difluorophosphate(V), AgPO₂F₂, in the acid solution of difluoro ortophosphoric(V) acid HPO₂F₂;
- silver(II) fluorosulphate(VI) or silver(I/II) fluorosulphate(VI) via the electrolysis of silver(I) fluorosulphate, AgSO₃F, in the acid solution of fluoroulphate(VI) acid, HSO₃F;
- silver(II) fluoroselenate(VI) or silver(I/II) fluoroselenate(VI) via the electrolysis of silver(I) fluoroselenate(VI), AgSeO₃F in fluoroselenic(VI) acid solution HSeO₃F;
- silver(II) pentafluorooxotellurate(VI) (teflate) or silver(I/II) pentafluorooxotellurate(VI) (teflate) via the electrolysis of silver(I) pentafluorooxotellurate(VI) (teflate) AgOTeF₅, in the acid solution of pentafluorooxotelluric(VI) acid (teflic acid) TeF₅OH.

The invention includes silver(II) salts obtained by the method of electrochemical synthesis described above and previously unknown silver(II) salts among the salts mentioned above.

Process for the synthesis of silver(II) salts hydrates, is characteristic in that the silver(II) salts or silver (I/II) salts are exposed to water, ice or steam, preferably water vapor, to form a hydrated salt having a water content in the range 0.5-5.0 molecules of water per each atom of silver(II).

The gaseous solution of water vapor with content in the range 0-100 g/m³, preferably 5-20 g/m³ is applied. Exposure to steam is performed 1-200 hours, preferably 40-50 hours. Exposure to water vapor is carried out at temperature from -50°C to +100°C, preferably at 20-30°C. Alternatively, a fine spray of water in the liquid state can be used. Alternatively, the ice is used, where the mixture of silver(II) salt and ice are mechanically dispersed in a suitable stoichiometric ratio, and then slowly heated to a temperature above 0°C, unless the salt decomposes at a temperature above 0°C.

According to the invention, silver(II) salts obtained by electrochemical method or by metathesis, preferably silver(II) nitrate(V), silver(I/II) nitrate(V), silver(II) metaphosphate(V), silver(I/II) metaphosphate(V), silver(II) ortophosphate(V), silver(I/II) ortophosphate(V), silver(I/II) sulphate(VI), silver(II) sulphate(VI), silver(II) selenate(V), silver(I/II) selenate(V), silver(I/II) chlorate(VII), silver(II) chlorate(VII), silver(I/II) bromate(VII), silver(II) bromate(VII), silver(I/II) iodate(VII), silver(II) iodate(VII), silver(I/II) fluorosulphate(V), silver(II) fluorosulphate(V), silver(I/II) difluoro ortophosphate(V), silver(II) difluoro ortophosphate(V), silver(I/II) fluoroselenate(VI), silver(II) fluoroselenate(VI), silver(I/II) trifluoroacetate, silver(II) trifluoroacetate, silver(I/II) trifluoromethanesulfonate (triflate). silver(II) trifluoromethanesulfonate (triflate), silver (I/II) pentafluorooxotellurate(VI) (teflate), silver(II) pentafluorooxotellurate(VI) (teflate), silver(II) perfluoro benzenesulfonate, silver(I/II) perfluoro benzenesulfonate, silver(II) perfluoro naphtalenesulfonate, silver(I/II) perfluoro naphtalenesulfonate, silver(II) methanesulfonate, silver(I/II) methanesulfonate, silver(II) benzenesulfonate, silver(I/II) benzenesulfonate, silver(II) naphtalenesulfonate, silver(I/II) naphtalenesulfonate, silver(II) salts of higher perfluorosulfonic and sulfonic acids CₙF₂ₙ₊₁SO₃H, CₙH₂ₙ₊₁SO₃H, Nafion^{®} or their derivatives, silver (I/II) salts of higher perfluorosulfonic and sulfonic acids CₙF₂ₙ₊₁SO₃H, CₙH₂ₙ₊₁SO₃H, Nafion^{®} or their derivatives, silver(II) salts of (CF₃)₂POOH and silver(I/II) salts of (CF₃)₂POOH.

The invention includes hydrates of the silver(II) salts mentioned above, including the hydrates of silver(II) salts obtained by the methods of synthesis of a silver(II) salt hydrates described above.

A method of modifying the molecular structures of organic compounds using an oxidising agent, and occurring in a liquid medium, especially organic, according to the invention is characteristic in that the oxidative initiation of a reagent comprises a redox compound, at least one compound of silver(II).

According to the invention the reaction is carried out as isomerization, dehydrogenation, cracking and/or coupling of molecules of organic compounds and the processes take place separately, simultaneously and/or sequentially. The reaction is carried out without prior functionalization or activation processing of organic compounds, maintaining the existing functional groups.

According to the invention the redox reagent is used in a molar ratio in the range from 0.01/1.0 to 10.0/1.0 with respect to the conjugated organic compounds based on the molar content of silver(II), preferably in a molar ratio of from 0.5/1.0 to 2.0/1.0.

According to the invention, the reaction medium is gaseous or liquid organic reagent or a solution of the organic reagent in organic solvent or mixture of organic solvents, preferably a mixture of single phase (gas or liquid), multiphase emulsion or aerosol. As the organic solvents can be used hydrocarbons (aliphatic, cyclic and aromatic), hydrofluorocarbons (aliphatic, cyclic and aromatic), perfluorocarbons (aliphatic and aromatic alkylciclic), fluoroalcohols (primary, secondary and tertiary), perfluoroalcohols (primary, secondary and tertiary), fluoroamines (primary, secondary and tertiary), perfluoroamines (primary, secondary and tertiary), fluoroesters (aliphatic and aromatic alkylcyclic), perfluoroesters (aliphatic and aromatic alkylcyclic), fluoroethers (aliphatic and aromatic alkylcyclic), perfluoroethers (aliphatic and aromatic alkylcyclic), halogen derivatives of alkanes, fluorinated ionic liquids perfluorinated ionic liquids, sulfuric(VI) acid, oleum, other acids of the same oxoanions and fluorooxoanios used as a silver(II) salt, and mixtures thereof, single-phases, multi-phases or emulsions. Preferably, the solvent is hexafluoroisopropanol, nonafluorotertbutanol, cyclopentane, n-pentane, cyclohexane,n-hexane, dichloromethane or mixtures with other solvents, thereof.

According to the invention the process is carried out in anaerobic atmosphere, preferably under argon or nitrogen in a vacuum. The reaction is carried out at temperatures of 200-400 K, preferably 270-350 K, most preferably at room temperature. Reactions are carried out in apparatus made of a material inert with respect to silver(II) compounds, preferably in the glass apparatus, quartz apparatus, an apparatus made of fluoropolymers, stainless steel, or the apparatus containing the layer of glass, quartz, fluoropolymers, or stainless steel. The reactions are performed using mechanical or magnetic stirrer. The reactions are performed using sonication. The reactions are performed using the microwave acceleration. The reactions are performed using UV irradiation. The addition of a Lewis acid, preferably BF₃·O(C₂H₅)₂ could be applied.

According to the invention the redox reagent comprising of silver(II) compound is in the same phase as the organic reagent. Alternatively, a redox reagent comprising of silver(II) compound is in a different phase than the organic reagent and the chemical reaction at the interface.

According to the invention silver(II) salts are used as silver(II) salts or silver(I/II) mixed valence salts comprising of oxoanions or oxofluoroanions, preferably salts, such as the silver(II) nitrate(V), silver(I/II) nitrate(V), silver(II) metaphosphate(V), silver(I/II) metaphosphate(V), silver(II) ortophosphate(V), silver(I/II) ortophosphate(V), silver(II) sulphate(VI), silver(I/II) sulphate (VI), silver(II) selenate(V), silver(I/II) selenate(V), silver(II) chlorate(VII), silver(I/II) chlorate(VII), silver(II) bromate(VII), silver(I/II) bromate(VII), silver(II) iodide (VII), silver(I/II) iodide(VII), silver(II) fluorosulphate(VI), silver(I/II) fluorosulphate(VI), silver(II) difluorophospate(V), silver(I/II) difluorophospate(V), silver(II) fluoroselenate(VI), silver(I/II) fluoroselenate(VI), silver(II) trifluoroacetate, silver(I/II) trifluoroacetate, silver(II) trifluoromethanesulfonate(VI) (triflate), silver (I/II) trifluoromethanesulphonate(VI) (triflate), silver(II) pentafluoroxsotellurate(VI) (teflate), silver(I/II) pentafluoroxsotellurate(VI) (teflate), silver(II) perfluorobenzenesufonate, silver (I/II) perfluorobenzenesulfonate, silver(II) perfluoronaphtalenesulfonate, silver(I/II) perfluoronaphtalenesulfonate, silver(II) methanesulfonate, silver(I/II) methanesulfonate, silver(II) benzenesulfonate, silver(I/II) benzenesulfonate, silver(II) naphtalenesulfonate, silver(I/II) naphtalenesulfoniate, silver(II) salts of higher perfluorosulfonic and sulfonic acids CₙF₂ₙ₊₁SO₃H, CₙH₂ₙ₊₁SO₃H, Nafion^{®} or their derivatives, silver(I/II) salts of higher perfluorosulfonic and sulfonic acids CₙF₂ₙ₊₁SO₃H, CₙH₂ₙ₊₁SO₃H, Nafion^{®} or their derivatives, silver(II) salts of (CF₃)₂POOH, silver(I/II) salts of (CF₃)₂POOH, and the hydrates of these salts. Preferably, used silver(II) compounds are trifluoromethanesulfonate(VI) (triflate), silver(II) fluorosulphate(VI), silver(I/II) fluorosulphate(VI), silver(II) sulphate(VI) and their hydrates. Alternatively, a compound of silver(II) in a solutions of a silver(II) salt, preferably silver(II) sulphate(VI) dissolved in a solution of sulphuric acid (VI) or oleum.

Alternatively, a compound of silver(II) is used in a solution containing ions of silver(II) either chemically or electrochemically generated in situ from suitable precursors directly in the reaction medium.

Silver(II) salts as redox reagents are used in reactions carried out as described above. Silver(II) salts are used for the disposal of hazardous waste and/or toxic organic materials. Solid silver(II) compounds or their solutions in concentrated acids are applied.

Organic compounds and mixtures prepared by the method described above.

A method for preparing silver(II) salts and their hydrates, the products obtained by these methods and their use to modify the molecular structures of organic compounds below are described in detail in embodiments, with reference to the accompanying drawings, in which:

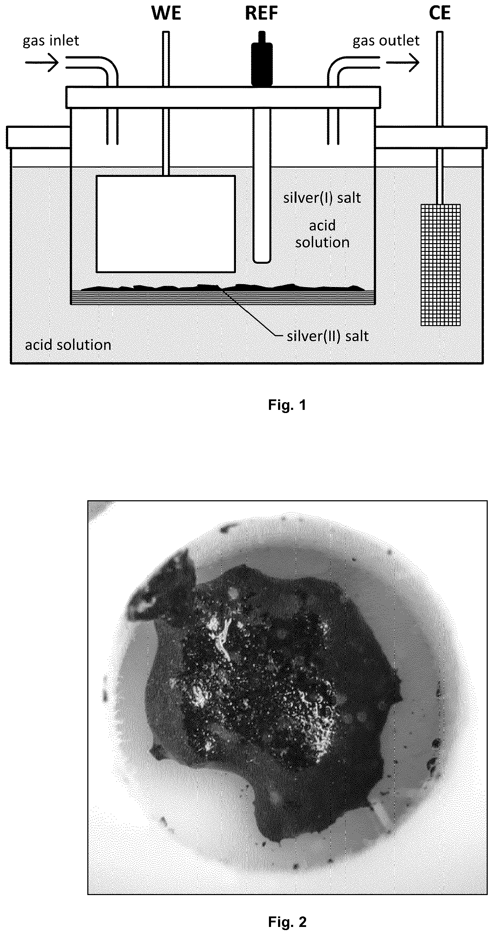

Fig. 1 shows a diagram of the electrochemical cell for electrochemical synthesis of silver(II) salts in a glass apparatus according to the invention, where WE is a working electrode, CE a counter electrode and REF the reference electrode;
Fig. 2 shows a photograph of the sample of silver(II) sulphate(VI), prepared with electrochemical synthesis according to the invention;
Fig. 3 shows a SEM photograph of the sample of silver(II) sulphate(VI), prepared with electrochemical synthesis according to the invention;
FIG. 4 shows the result of elemental analysis (EDS) of the sample of silver(II) sulphate(VI), prepared with electrochemical synthesis of the present invention;
FIG. 5 shows a comparison of X-ray powder diffraction orf silver(II) sulphate(VI), prepared in the electrochemical synthesis of the present invention, with the X-ray powder diffraction pattern generated on the base of the crystal structure of the silver(II) sulphate [CrystEngComm, 15 (2013) 192]; λ = 1,789 Å;
FIG. 6 shows Raman spectrum of silver(II) sulphate(VI), prepared with the electrochemical synthesis of the invention, recorded with 632 nm excitation radiation;
Fig. 7 shows an X-ray powder diffraction pattern of the sample of silver(II) triflate prepared with the electrochemical synthesis according to the invention, using a cobalt radiation λ = 1.78901 Å;
Fig. 8 shows a Raman spectrum of silver(II) triflate prepared with the electrochemical synthesis according to the invention, recorded at 632 nm excitation radiation;
Fig. 9 shows the results of Rietveld analysis of silver(II) sulphate(VI) monohydrate obtained by the method of synthesis of hydrates according to the invention; for calculated data for X-powder diffraction radiation of wavelength λ = 1.54056 Å was used;
Fig. 10 shows the Raman spectrum of silver(II) sulphate(VI) monohydrate obtained by the method of synthesis of hydrates according to the invention;
Fig. 11 shows the FTIR spectrum in the mid and far infrared range of the sample of silver(II) sulphate(VI) monohydrate obtained by the method of synthesis of hydrates according to the invention;
Fig. 12 shows the results of thermogravimetric analysis (TGA/DSC) of silver(II) sulphate(VI) monohydrate obtained by the method of synthesis of hydrates according to the invention, registration of a heating rate of 5 K / min;
Fig. 13 is a schematic diagram of processes of modifying of the structures of molecules of organic compounds (isomerization, dehydrogenation, cracking, coupling) with a silver(II) compound acting as a redox reagent for oxidative initiation of a chemical reaction and/or catalyst and/or reagent;
Fig. 14 is a schematic diagram of the isomerization process using a silver(II) compound acting as a redox reagent for oxidative initiation of a chemical reaction and/or catalyst and/or reagent;
Fig. 15 is a schematic diagram of the dehydrogenation process using a silver(II) compound acting as a redox reagent for oxidative initiation of a chemical reaction and/or catalyst and/or reagent;
Fig. 16 is a schematic diagram of cracking and coupling with a silver(II) reagent acting as a redox reagent for oxidative initiation of a chemical reaction and/or as catalyst and/or as reagent;
Fig. 17 is a flow diagram of a process of coupling, ring formation, cracking and ring opening, using a silver(II) compound as the reagent acting as a redox reagent for oxidative initiation of a chemical reaction and/or as catalyst and/or as reagent;
Fig. 18 is a schematic diagram of a coupling process of dehydrogenation and ring formation, and hydrogenation cracking and ring opening, using a silver(II) compound as the reagent acting as a redox reagent for oxidative initiation of a chemical reaction and/or as catalyst and/or as reagent;
Fig. 19 is a block diagram of the process of homo-coupling of molecules of organic compounds using a silver(II) salt in a separate step in creating a cation as a transition stage.
Fig. 20 is a block diagram of the process of cross-coupling of molecules of organic compounds using a silver(II) salt in a separate step in creating a cation as a transition stage.

### Detailed description of the invention

In the following description and the appended claims, the terms silver(II) salt and a compound of silver(II) is a compound containing silver in the +II oxidation state, optionally in combination with other metallic cations (including silver in +1 oxidation state). The term oxoanion is for anion consisting of cations of metal with oxygen atoms. The term oxofluoroanion is an anion consisting of cations of metal with oxygen and/or fluorine atoms.

The term electrolyte is a salt of a significant ionicity which is easily electrolytic dissociated in ionizing solvents.

The term oxidative initiation means to initiate chemical changes occurring under the influence of a strong oxidant. Description of the redox reagent is a substance or mixture of substances with strong oxidizing agents. According to the invention the redox reagent comprises at least one silver(II) compound. The reagent can act as a redox reagent that is consumed (stoichiometric) in the course of the reaction and/or act as the initiator and/or catalyst.

**A method of electrosynthesis of silver(II) salt.** Method of electrosynthesis of silver(II) salts allows to prepare silver(II) salts containing oxoanions or oxofluoroanions with inorganic elements in a high oxidation state, such as C(IV), N(V), P(V), S(VI) Se(VI), Te(VI), CI(VII), Br(VII) and I(VII), for example, anions such as nitrates(V), phosphates(V), sulphates(VI), selenates(VI), chlorates(VII), bromates(VII) and iodates(VII), difluorophosphates(V), fluorosulphates(VI) and fluoroselenates(VI), trifluoroacetates, pentafluorooxotellurates(VI) (teflates) and also trifluoromethanesulfonates (triflates), perfluorobenzenesulfonates, perfluoronaphtalene sulfonantes, methanesulfonates, benzenesulfonates, naphtalenesulfonantes, salts of higher perfluorosulfonic and sulfonic acids of the type CₙF₂ₙ₊₁SO₃H, CₙH₂ₙ₊₁SO₃H, Nafion^{®}, and derivatives thereof. Salts of anions containing ions of silver(II) can be prepared via the electrolysis carried out in pure acids or their solutions in solvents because they include inorganic anions (containing non-metals in the highest oxidation state) which are resistant to the oxidizing action of silver(II) ions and to the strongly anodic potentials.

Electrosynthesis of silver(II) salts is carried out in accordance with the invention in an electrochemical system comprising at least two electrodes: a working electrode and a counter electrode. For better potential control of the ongoing reaction system, three electrodes are usually used, where the third electrode is a reference electrode

Electrosynthesis of silver(II) salts is conducted in the acid solution containing the same ion assynthesized silver(II) salt, for example nitric(V) acid HNO₃, metaphosphoric(V) acid HPO₃, phosphoric(V) acid H₃PO₄, sulphuric(VI) acid H₂SO₄, selenic(VI) acid H₂SeO4, perchloric(VII) acid HClO₄, perbromic(VII) acid HBrO₄, periodic(VII) acid HIO₄, difluoroortophosphoric(V) acid HPO₂F₂, fluorosulphuric(VI) acid HSO₃F acid, fluoroselenic(VI) acid HSeO₃F, trifluoroacetic acid, pentafluorooxotelluric(VI) (teflic) acid, triflic acid HSO₃CF₃, perfluoro benzenosulfonic acid, perfluoro naphtalenesulfonic acid, methanesulfonic acid, benzenesulfonic acid, naphtalenesulfonic acid, higher perfluorosulfonic and sulfonic acids of type CₙF₂ₙ₊₁SO₃H and CₙH₂ₙ₊₁SO₃H, Nafion^{®}, and the like. Ideally, the concentration of the solution of the acids used is at least 80%, preferably above 95%. Acceptable contamination of the acid is water, the acid anhydride or another suitable solvent forming a solution of a silver(I) salt and the acid, optionally with the addition of electrolyte.

As the working electrode an electrode made of doped tin oxide (ITO, FTO) is used. As the counter electrode an electrode made of silver sheet, with surface area greater than the actual specific surface of the working electrode, is used. The surface of electrode is modified to develop the actual surface before conducting electrolysis. As a reference electrode, for example, saturated silver(I) sulphate electrode in 100% sulfuric(VI) acid with a potential of 815 mV vs. the standard hydrogen electrode (J. Phys. Chem. C, 117 (2013) 20689) or other reference electrode, with little or no diffusion potential with respect to acid solution, is used.

Electrosynthesis of silver(II) salt is carried out under an inert atmosphere in order to avoid any contact with atmospheric moisture as silver(II) salts decompose during uncontrolled contact with water. The shielding gases include argon or nitrogen of high purity. It was observed that the surface coating layer of sulfur(VI) hexafluoride above of the solution of acid further reduces the risk of contact between synthesized silver(II) salt and atmospheric moisture. It is possible to carry out the electrosynthesis of the silver(II) salts using pure sulfur(VI) hexafluoride as a protective gas.

The precursors for synthesis are the silver(I) salts and acid salts of silver(I) containing the same inorganic anion as synthesized silver(II) salt, for example silver(I) nitrate(V) AgNO₃, silver(I) metaphosphate(V) AgPO₃, silver(I) orthophosphate(V) Ag₃PO₄, silver(I) hydrogen phosphate(V) Ag₂HPO₄, silver(I) dihydrogen phosphate(V) AgH₂PO₄, silver(I) sulphate(VI) Ag₂SO₄, silver(I) hydrogensulphate (VI) AgHSO₄, silver(I) selenate(VI) Ag₂SeO₄, silver(I) hydrogen selenate(VI) AgHSeO₄, silver(I) chlorate(VII) AgClO₄, silver(I) bromate(VII), AgBrO₄, silver(I) iodidate(VII) AgIO₄, silver(I) difluoroortophosphate(V) AgPO₂F₂, silver fluorosulphate(VI) AgSO₃F, silver(I) fluoroselenate(VI) AgSeO₃F, silver(I) trifluoroacetate AgCOOCF₃, silver(I) pentafluorooxotellurate(VI) (teflate) AgOTeF₅, silver(I) triflate AgSO₃CF₃, silver(I) perfluoro benzenesulfonate, silver(I) perfluoro naphtalenesulfonate, silver(I) methanesulfonate, silver(I) benzenesulfonate, silver(I) naphtalenesulfonate, silver(I) salts of higher perfluorosulfonic and sulfonic acids of type CₙF₂ₙ₊₁SO₃H, CₙH₂ₙ₊₁SO₃H or Nafion^{®} and silver(I) salt of (CF₃)₂POOH. These are not dangerous chemicals, they are easy to obtain and they are cheap. These salts most frequently dissolve in the corresponding acids containing the same anion, carried out in the form of a liquid (solution or molten state), which is favorable for the ongoing process.

Electrosynthesis of silver(II) salt is carried out at higher anodic potential than the formal potential of the redox couple Ag(II)/Ag(I), which in concentrated acids containing oxoanions, fluoroanions or oxofluoroanions exceeds 2 V, for example in 96% sulfuric(VI) acid redox couple Ag (II)/Ag(I) is about 2.6 V [Chem. Comm., 49 (2013) 7463].

Electrosynthesis of silver(II) salt is carried out in a concentrated acid solution at a concentration of above 80%, where the contaminants of acids are water, the acid anhydride or another suitable solvent forming a solution of a silver(I) salt and the acid, optionally with the addition of electrolyte. Optimal conditions are obtained for the electrosynthesis with acid concentrations greater than or equal to 95%. Large concentrations of acids are necessary because of the need to ensure the high purity of the reaction medium during the process of electrosynthesis of silver(II) salt. Given the difficulties in obtaining 100% acids, proces is carried out at a slightly lower acid concentration, thus using cheap and durable materials.

The electrolysis yields the product as a solid forming on the working electrode, which then falls to the bottom of the electrochemical vessel. The product was washed with hydrogen fluoride (as in the synthesis of silver(II) sulphate(VI)), or with pure concentrated acid, where the electrolysis is carried out in order to wash out the substrates. It is possible to carry out repeated washing by using solutions of acid, in which the electrolysis was carried out, while using the increasing water content. After washing, the product is dried. It is possible to dry the product under vacuum.

For example, the electrolysis of silver(I) sulphate(VI) solution or silver(I) hydrogen sulphate(VI), yields yellow solution of silver(II) hydrogen sulphate(VI) solvated with sulphuric acid, or a solution containing complex moiety Ag(HSO₄)₂·(H₂SO₄)₂ (J. Phys. Chem., 117 (2013) 20689). The half-life of complex moieties Ag(HSO₄)₂·(H₂SO₄)₂ is about 10 s in 100% sulphuric(VI) acid. It is determined that this is the maximum value of half-life of the Ag(HSO₄)₂·(H₂SO₄)₂ complex moieties. After exceeding the concentration limit of the yellow solution with Ag(HSO₄)₂·(H₂SO₄)₂, the black solid silver(II) sulphate(VI) precipitates and settles on the bottom of the vessel, wherein the synthesis is carried out. Product of electrosynthesis was washed with anhydrous hydrogen fluoride in order to remove the sulphuric(VI) acid.

The process of the electrosynthesis is carried out at a temperature appropriately selected for the particular reaction, so that the acid solution is in liquid state and so that the temperature is the range of thermal stability of the resulting product. For example, the synthesis of silver(II) selenate(VI) was carried out at a temperature above 58°C because the selenic(VI) acid has a melting point of 58°C. The syntheses of the silver(II) nitrate(V) and silver(II) chlorate(VII) were carried out at decreased temperature as the reaction products decompose at temperatures above -30°C. The syntheses of some of the silver(II) salts may be carried out at room temperature, for example, synthesis of silver(II) triflate.

**Silver(II)** salts of the invention are of very high purity and can be used as a selective oxidizing agents in organic synthesis and as an oxidizing agents to treat the waste of hydrocarbons and dangerous materials, such as persistent organic pollutants, i.e. carcinogenic polyaromatic hydrocarbons, industrial waste, waste nuclear industry, and others.

Electrosynthesis of silver(II) salts of the invention allows the reuse of the reduced silver(II) products, what enables cyclic use of this material as an oxidizing agent without incurring additional expenses for materials for its synthesis. The main cost replacement for synthesis of silver(II) sulphate is the cost of electricity. The method of the invention is of a high efficiency and is environmentally friendly.

Described electrochemical synthesis of silver(II) sulphate(VI) does not produce any hazardous chemicals that would be difficult to dispose. Synthesis process according to the invention does not require the use of substrates obtained by the use of hazardous chemicals, such as elemental fluorine.

A method of electrochemical synthesis of the silver(II) salts according to the invention allows to obtain products of high purity in a high yield with respect to the used electric charge. For example, silver(II) sulphate(VI) obtained by the method according to the invention has a very high purity and can be used as a selective oxidizing agent in organic synthesis and as an oxidizing agent for hydrocarbon waste and hazardous materials. Silver(II) sulphate(VI) obtained by the method according to the invention is of very high crystalinity with crystallite size in the range 20-500 microns. The largest observed particle of silver(II) sulphate(VI) obtained by the method according to the invention has a size greater than 1 mm in length. A method of electrochemical synthesis of silver(II) sulphate(VI) according to the invention allows to obtain a product with a yield of up to 69% relative to the used electric charge. The method of the invention has high efficiency and it is environmentally friendly.

**Process for the synthesis of silver(II) salts hydrates (II).** Hydrates of the silver(II) salts are chemicals that contain both silver ions Ag(II) and the coordinated water molecules. Hydrates of the silver(II) salts retain all desirable characteristics of silver(II) compounds (i.e., high redox potential, chemical inertness in contact with hydrocarbons, etc.), while they are water resistant. This is significant advantage, because facilities are able to use the silver(II) salt hydrates as chemicals under normal conditions in an air atmosphere containing moisture. Silver(II) hydrates salts as the chemicals are subject to the same reactions as the hydrate-free forms, so that they can be used to in all chemical reactions that are characteristic of the silver(II) salt.

Despite the known high sensitivity of silver(II) salt to water, it was unexpectedly observed that synthesis of silver(II) salts of hydrates with a controlled exposure of silver(II) salts to water is possible. It is important to control the hydratation process parameters such as reaction temperature, the physical state of water, air humidity, length of exposure, concentration of reactants, and others. Please note that uncontrolled exposure of silver(II) salt to water results in the hydrolysis.

It is possible expose the silver(II) salt obtained by any method, to water vapour under controlled conditions. Hydrates of the silver(II) salts have a water content in the range 0.5-5.0 molecules of water per each atom of silver(II) and are formed already after a few hours of exposure to water vapour at a concentration in the range of 1-100 g/m³ in the ambient air at room temperature. The temperature and water vapor concentration should not be too high because the key is slow penetration of a small portion of water into the crystal structure of the silver(II) salt. Otherwise, there is a hydrolysis of the silver(II) salt to the corresponding salt of silver(I), as described earlier in the literature [P. J. Malinowski, "Synthesis and characterization of some oxygen derivatives of divalent silver", PhD thesis, University of Warsaw, 2012**].**

For the synthesis of the silver(II) salt hydrates, silver(II) salts prepared by any method can be used. For example silver(II) nitrate, silver(I/II) nitrate(V, silver(II) metaphosphate(V), silver(I/II) metaphosphate, silver(II) orthophosphate(V), silver(I/II) orthophosphate(V), silver(II) sulphate(VI), silver(I/II) sulphate(VI), silver(II) selenate(VI), silver(I/II) selenate(VI), silver(II) chlorate(VII), silver(I/II) chlorate(VII), silver(II) bromate(VII), silver(I/II) bromate(VII), silver(II) iodidate(VII), silver(I/II) iodate(VII), silver(II) difluoroortophosphate(V), silver(I/II) difluoroortophosphate(V), silver(II) fluorosulphate(VI), silver(I/II) fluorosulphate(VI), silver(II) fluoroselenate(VI), silver(I/II) fluoroselenate, silver(II) trifluoroacetate, silver(I/II) trifluoroacetate, silver(II) trifluoromethanesulfonate(VI) (triflate), silver(I/II) trifluoromethanesulfonate(VI) (triflate), silver(II) pentafluorooxotellurate(VI) (teflate), silver(I/II) pentafluorooxotellurate(VI) (teflate), silver(II) perfluoro benzenesulfonate, silver(I/II) perfluoro benzenesulfonate, silver(II) perfluoro naphtalenesulfonate, silver(I/II) perfluoro naphtalenesulfonate, silver(II) methanesulfonate, silver(I/II) methanesulfonate, silver(II) benzenesulfonate, silver(I/II) benzenesulfonate, silver(II) naphtalenesulfonate, silver(I/II) naphtalenesulfonate, silver(II) and silver(I/II) salts of higher perfluorosulfonic and sulfonic acids of type CₙF₂ₙ₊₁SO₃H, CₙH₂ₙ₊₁SO₃H or Nafion^{®} and silver(II) salt of (CF₃)₂POOH and silver(I/II) salt of (CF₃)₂POOH.

Purity of silver(II) hydrate salts directly depends from the purity of the substrates. The best samples were obtained using silver(II) salts with large crystallites obtained by electrochemical method described above.

### A method of modifying the structures of molecules of organic compounds.

A method of modifying the structures of molecules of organic compounds according to the invention relates to the isomerization reactions (including cyclization and ring opening) dehydrogenations (including aromatization), cracking (i.e., breaking of C-C bonds) and coupling (i.e., formation of C-C bonds) of the molecules organic compounds without previous need for modification or activation, which occurrs due to the oxidative initiation using a redox reagent containing silver(II) compounds. In theses processes, molecules of hydrocarbons are involved, or derivatives thereof, and the initiating agent (redox reagent) contains silver(II) compound.

In the present invention a reagent provides the oxidative redox initiation of chemical reactions. Redox reagent comprises of at least one silver(II) compound thus having very high redox potential. It is possible to use various silver(II) compounds and mixtures thereof. For example, silver(II) salts comprising of oxoanions or oxofluoroanions.

Oxidative coupling reactions of organic molecules, in the present invention proceed without first being modified or activated. This process involves the conjugation of the molecules of hydrocarbons or their derivatives and an oxidizing agent containing silver(II) compound. The process allows homo-coupling and cross-coupling of various types of organic compounds without functionalizing them first. The formation of carbon-carbon bonds takes place between the carbon atoms having only hydrogen substituents. It is possible to couple organic compounds to form a carbon-carbon bond between the carbon atoms in different hybridization, for example sp³-sp³, sp³-sp², sp³-sp, sp²-sp², sp²-sp, sp-sp. In the process according to the invention it is possible the couple two or more organic molecule components. The process may be performed under normal conditions.

For example, a redox reagent in the process according to the invention are substances containing silver(II) salts or hydrates thereof. Silver(II) salts are selected from the group consisting of silver(II) nitrate(V), silver(I/II) nitrate(V), silver(II) metaphosphate(V), silver(I/II) metaphosphate(V), silver(II) ortophosphate(V), silver(I/II) ortophosphate(V), silver(II) sulphate(VI), silver(I/II) sulphate(VI), silver(II) selenate(V), silver(I/II) selenate(V), silver(II) chlorate (VII), silver(I/II) chlorate(VII), silver(II) bromate(VII), silver(I/II) bromate(VII), silver(II) iodide(VII), silver(I/II) iodide(VII), silver(II) fluorosulphate(VI), silver(I/II) fluorosulphate(VI), silver(II) difluorophospate(V), silver(I/II) difluorophospate(V), silver(II) fluoroselenate(VI), silver(I/II) fluoroselenate(VI), silver(II) trifluoroacetate, silver(I/II) trifluoroacetate, silver(II) trifluoromethanesulfonate(VI) (triflate), silver(I/II) trifluoromethanesulphonate(VI) (triflate), silver(II) pentafluoroxotellurate(VI) (teflate), silver(I/II) pentafluoroxotellurate(VI) (teflate), silver(II) perfluorobenzenesulfonate, silver(I/II) perfluorobenzenesulfonate, silver(II) perfluoronaphtalenesulfonate, silver(I/II) perfluoronaphtalenesulfonate, silver(II) methanesulfonate, silver(I/II) methanesulfonate, silver(II) benzenesulfonate, silver(I/II) benzenesulfonate, silver(II) naphtalene sulfonate, silver(I/II) naphtalene sulfonate, silver(II) salts of higher perfluorosulfonic and sulfonic acids CₙF₂ₙ₊₁SO₃H, CₙH₂ₙ₊₁SO₃H, Nafion^{®} or their derivatives, silver(I/II) salts of higher perfluorosulfonic and sulfonic acids CₙF₂ₙ₊₁SO₃H, CₙH₂ₙ₊₁SO₃H, Nafion^{®} or their derivatives, silver(II) salt of (CF₃)₂POOH, silver(I/II) salt of (CF₃)₂POOH, and the hydrates of these salts.

Preferably the redox reagent in process of the invention is silver(II) trifluoromethanesulfonate(VI) (triflate), silver(II) fluorosulphate(VI), silver(I/II) fluorosulphate(VI), silver(II) sulphate(VI) or hydrates thereof containing silver(II). The use of silver(II) triflate, silver(II) sulphate(VI), and silver(II) sulfate(VI) hydrate has the advantage that they are ones of the few silver(II) compounds which are not fluorinating agents. The process of the present invention is not limited to any of the above oxidizing agents based on compounds of silver(II). It is also possible to use mixtures of compounds of silver(II), with other adjuvants. It is also possible chemically or electrochemically generate silver(II) ions from the appropriate precursors directly in situ in the reaction medium. It is also possible to use solutions of silver(II) salts, for example silver(II) hydrogensulphate(VI) dissolved in a solution of sulphuric(VI) acid or oleum.

In the reactions described below, there is mostly complete reduction of the Ag(II) compounds to Ag compounds with Ag(I) or Ag(0). In these reactions, strong Lewis acids and/or Brønsted can form whose presence during the reaction allow further increase of the oxidizing power of Ag(II) compounds used in the reaction. In the reactions additional chemicals may, but not necessarily, participate as solvents for the reactants or as heat abrobers.

Redox reagent is used in a molar ratio in the range from 0.01/1.0 to 5.0/1.0 with respect to the conjugated organic compounds, based on the molar content of silver(II). Broad range of the molar amount of oxidizing agent in the reaction mixture is due to the fact that the coupling reactions of various organic compounds may take place according to various mechanisms. In most mechanisms there is an intermediate stage which involves a radical cation formation by reaction of organic compound with a redox reagent in a stoichiometric ratio of 1:1. In further reaction the cation can react with another formed cation, or with another neutral or modified molecule (i.e., due to the occurrence of cracking or dehydrogenation reaction), or further reaction with a reagent containing Ag(II). Therefore, despite of the constant stoichiometric ratio of reagents participating in the first chemical reaction, the molar ratio of reactants vs. the oxidizing agent may vary within a wide range. In some processes catalytic effect of the silver(II) compounds is observed, that changes the content of oxidizing agent in the reaction mixture to approx. 1 mol%.

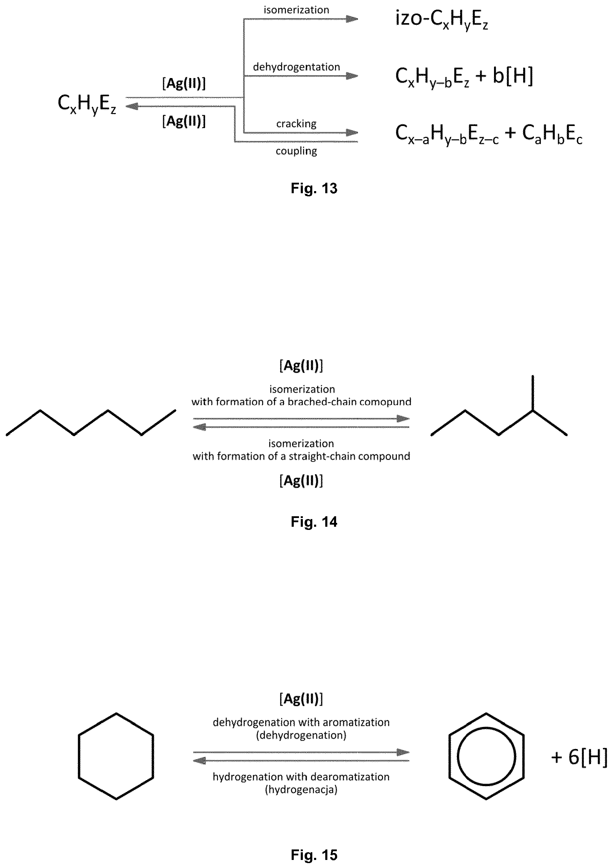

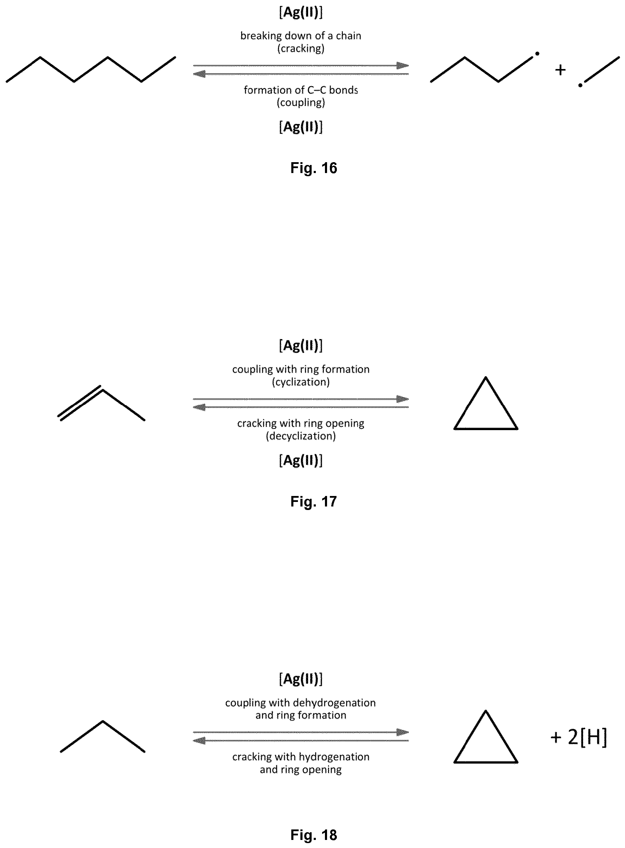

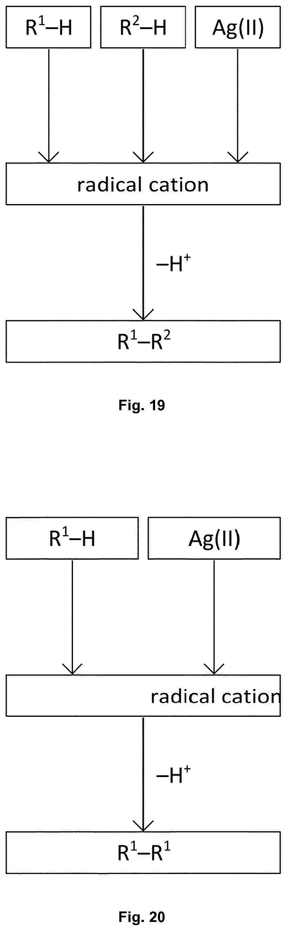

The method of the invention allows to carry out the modifications of molecular structures of organic compounds by a chemical reactions such as isomerization (examples 8, 9, 15), dehydrogenation (examples 8, 9, 10, 18), cracking (examples 8, 9, 18) and coupling (examples 8, 9, 10). The process schemes of modifying the structures of molecules of organic compounds with the silver(II) compound are shown in Figures 13-20, the diagrams on Figures 19-20 relate to processes of homo-coupling and cross-coupling of molecules of organic compounds. The processes of disposal of hydrocarbons and their derivatives are illustrated in Examples 18 and 19.

The method of the invention allows to carry out a chemical reaction with respect to organic compounds which are solids, liquids or gases. Redox reagent comprise of at least one silver(II) compound and can be in solid or liquid phase, but generally silver(II) salts are present in the solid phase. Therefore, the chemical reactions carried out according to the invention occur most often between the organic compound and the redox reagent as solid/liquid and solid/gas, wherein the solid is a redox reagent (fixed bed or slurry), and the organic reagent or organic reagent mixture is in gaseous (vapor) or liquid liquid form, or as an emulsion or spray.

The chemical reactions carried out according to the invention can proceed directly between the redox reagent comprising of at least one silver(II) compound and an organic reagent or mixture of organic reactants. It is also possible to use solvents, preferably organic solvents to ensure appropriate reaction medium.

In the process according to the invention, chemical solvents that are inert with respect to silver(II) compounds are used. Experimentally it was found that the best results are obtained by using n-pentane, cyclopentane, n-hexane, cyclohexane and hexafluoroisopropanol, or a mixture of single-phase, multi-phase emulsions of these solvents. The process of the present invention is not limited to any of the above solvents. Alternatively, among others is possible to use liquid hydrocarbons (aliphatic, cyclic and aromatic), hydrofluorocarbons (aliphatic, cyclic and aromatic), perfluorocarbons (aliphatic and aromatic alkyl-cyclic), fluoroalcohols (primary, secondary and tertiary), perfluoroalkohols (primary, secondary and tertiary), fluoroamines (primary, secondary and tertiary), perfluoroamines (primary, secondary and tertiary), fluoroesters (aliphatic and aromatic alkyl-cyclic), perfluoroesters (aliphatic and aromatic alkyl-cyclic), fluoroethers (aliphatic and aromatic alkyl-cyclic), perfluoroethers (aliphatic and aromatic alkyl-cyclic), halogen derivatives of alkanes, fluorinated ionic liquids, perfluorinated ionic liquids, sulfuric(VI) acid, oleum or other acids of the same oxoanion and fluoroxoanion as a used silver(II) salt, and mixtures of single-phase, multi-phase emulsions of these solvents. The type of the solvent depends on the nature of the organic reagent and on the Ag(II) compound being employed.

The chemical reaction in the process according to the invention is carried out in a protective atmosphere, for example under argon or nitrogen. A protective atmosphere is needed for the protection of the oxidizing agent from water and atmospheric humidity, because silver(II) compounds are generally very sensitive to moisture. Except for some selected hydrates of the silver(II) salts, which are insensitive to atmospheric moisture.

According to the invention the use of protective atmosphere is not necessary in cases where silver(II) compounds, organic reactants, intermediates and final products are not sensitive to moisture.

The chemical reaction in the process according to the invention is carried out in apparatus of a material inert with respect to silver(II) compounds. Used equipment includes glass, quartz equipment, apparatus made of fluoropolymers, stainless steel, or apparatus covered with glass, quartz, fluoropolymers or stainless steel. The reactions can also be carried out in an apparatus comprising of components made of different materials which are inert with respect to silver(II) compounds. The process of the present invention is not limited to any of the above materials.

The chemical reactions in the process according to the invention are carried out until completion of the reaction progress observed. Any particular preferred time of the process is not advised. In order to accelerate/enhance the efficiency of chemical reactions, in accordance with the present invention, additional treatments such as constant agitation, ultrasound, UV light, microwave radiation can be applied. These activities are aimed to facilitate and increase the area of contact between the reactants and the oxidizing agent to accelerate coupling process.

To increase the yield of chemical reactions according to the method of the invention the addition of a Lewis acid, preferably BF₃·O(C₂H₅)₂ can be applied. The addition of the Lewis acid reduces the reaction time and increases the rate of reaction. The presence of a Lewis acid can increase the oxidizing power of the Ag(II) compounds used in the reaction.

The isomerization reactions (including cyclization and ring opening), dehydrogenation (including aromatization), cracking (i.e., breaking of C-C bonds) and coupling (i.e., formation of C-C bonds) of molecules of organic compounds of the invention may occur separately (as for example dehydrogenation reaction in example 9), parallely (e.g., cracking reactions, isomerization and coupling in example 5) or sequentially (e.g., coupling and dehydrogenation reactions in example 3).

The optimum method for particular reaction, i.e., the choice of reaction medium, pressure and temperature, as well as the yield and selectivity of the proces, depend on many parameters, including the nature of the organic compound, the type and nature of redox reagent of the applied silver(II) compound, the physical state of the reactants, and the the nature of the solvent used (if used), etc.

As a result of the reaction of modifying the molecular structures of organic compounds according to the invention, mixtures of products are generally obtained in which starting organic compounds could be still present. After completion of chemical processes, the resulting mixtures are further treated to separate and purify components.

Oxidative initiation in the method of modifying the structures of molecules of organic compounds described above, proceeds via a redox reagent comprising of at least one silver(II) compound. The initiation of the chemical process may occur by various mechanisms, which usually extend through the stage of the charge transfer between the organic compound and the silver(II) ion which results in formation of cations. The reaction of cation formation occurs most often in the stoichiometric ratio of 1:1 between redox reagent and the organic reagent. Resulted cation may then react with another formed cation or with another neutral or modified molecule (e.g., as a result of the cracking reaction). In some processes catalytic effect of silver(II) compounds was observed, that effects in the change of the content of oxidizing agent in the reaction mixture at approx. 1 mol%.

According to the invention, silver(II) compounds are used in organic synthesis as redox reagents responsible for the initiation of the oxidative reactions that lead to modification of molecular structure of organic compounds.

Preferably the redox reagents used in organic synthesis according to the invention are silver(II) trifluoromethanesulfonate(VI) (triflate), silver(II) fluorosulphate(VI), silver(I/II) fluorosulphate(VI), silver(II) sulphate, or hydrates thereof containing silver(II). The use of silver(II) triflate, silver(II) sulfate(VI), or silver(II) sulfate(VI) hydrate has the advantage that they are ones of the few silver(II) compounds, which are not fluorinating agents. The process of the present invention is not limited to any of the above oxidizing agents based on compounds of silver(II).

A method of modifying of structures of molecules of organic compounds and agents used in this method have been thoroughly tested in laboratory organic syntheses.

The process according to the invention is characteristic by the capability to modify previously inaccessible organic compounds in organic synthesis. According to the invention, reactions can be carried out at room temperature over a number of organic compounds, which are considered to be chemically stable under normal conditions. For example, according to the present invention, there is the cracking of n-alkanes with a chain length below C10 at a temperature not exceeding 50°C. This gives great opportunities for the industry of processing and refining of hydrocarbons.

Use of silver(II) salt as redox reagents in organic synthesis opens up previously unknown possibilities for the synthesis and transformation of organic compounds at a ambient temperature.

The selectivity of the various silver(II) salts and their chemical activity can vary considerably for the same organic reactants. The activity of the silver(II) with respect to the organic compound is extremely powerful and allows the conversion of hydrocarbons with negligible reactivity, such as n-paraffins having a chain length of less than 6. It gives large possibilities for application of the silver(II) salt (II) as redox reagents in organic synthesis.

Extremely strong activity of silver(II) salts in relation to organic compounds also gives great opportunities in their use as redox reagents for recycling of hydrocarbons, toxic hydrocarbons and their derivatives, or hazardous materials, such as Persistent Organic Pollutants, carcinogenic polyaromatic hydrocarbons, industrial waste, waste from nuclear industry, and others. The rendering process is based on the degradation of the recycled substances to simple chemical compounds, that are non-toxic to the environment, animals and humans. For example, the disposed products that may be fomed are carbon dioxide, water vapour, liquid and gaseous simple hydrocarbons, non-toxic salt of silver(I), i.e. a product of the reduction of silver(II) salt.

**Examples of use.** A method for preparing a silver(II) salt and their hydrates, the products obtained by these methods and their use to modify the molecular structures of organic compounds have been thoroughly tested in laboratory. The methods of the invention are described below in Examples, and the products obtained in given examples have the properties listed in the Tables below.

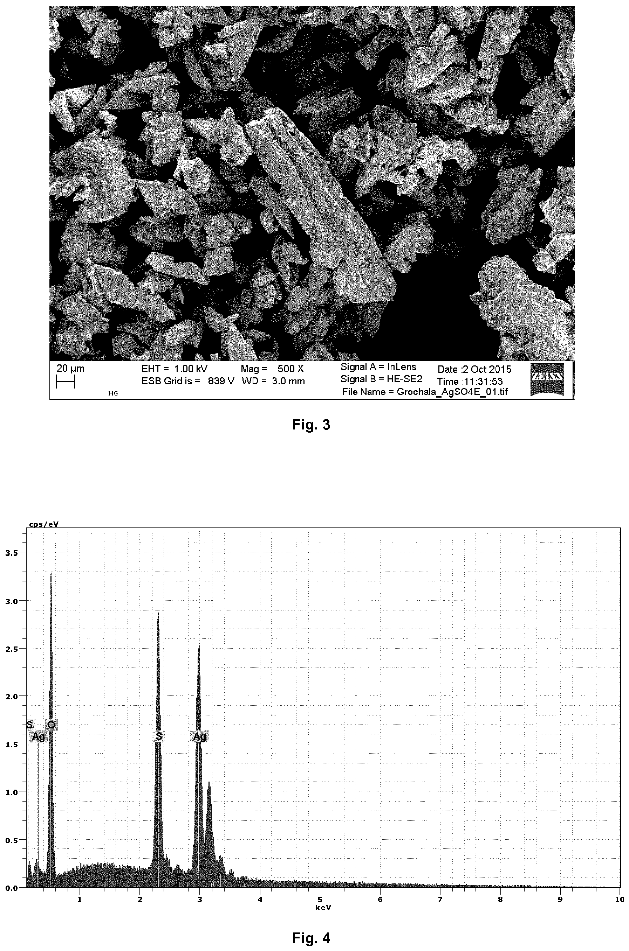

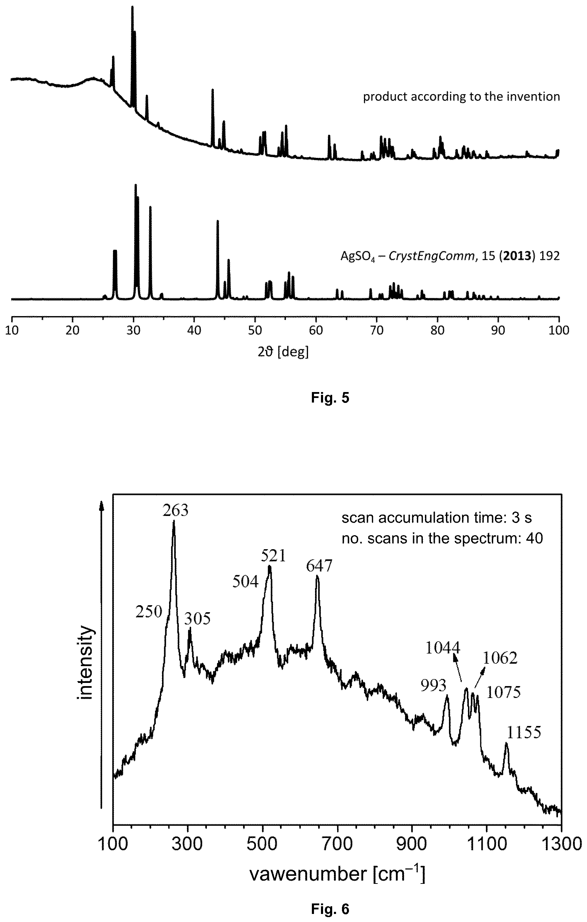

**Example 1** Electrosynthesis of silver(II) sulphate(VI) was carried out according to the invention. The electrolysis was performed in a glass apparatus. The apparatus consisted of two parts connected by a porous sintered glass. The glass apparatus was washed twice with distilled sulphuric(VI) acid, then washed with water, then twice more with distilled sulphuric(VI) acid. System uses three electrodes: a working electrode (EC) made of FTO, counter electrode (CE) as a silver sheet with the actual surface 300 cm², reference electrode (REF), i.e., saturated silver sulphate electrode in 100% sulphuric acid with potential of 815 mV relative to a standard hydrogen electrode(NHE). A working electrode and a reference electrode were placed in a part of the apparatus in which the electrolysis is carried out; second part was an auxiliary electrode. The reaction system was a solution of the silver(I) sulphate(VI) in 96% sulphuric(VI) acid. The reaction system was tightly closed and the atmosphere filled with argon with a purity of N6.7. The surface of solution was covered with a layer of sulphur(VI) hexafluoride. Electrolysis was performed at a potential in the range of 2.6-3.8 V vs. the standard hydrogen electrode (NHE). During the process a colorless solution of sulphuric acid turned yellow and then the black solid began to precipitate from solution, and it was collected at the bottom of the reaction vessel. After completion of the electrolysis, product was washed with anhydrous hydrogen fluoride, which was removed under vacuum. The resulting product was subjected to chemical, spectroscopic and structural analysis. The results of analyzes are shown in Table 1 and in the Figures 3, 4, 5, 6. The reaction product was identified as the silver(II) sulphate(VI). No significant amounts of impurities were detected in the main product.

**Table 1. Results of elemental analysis (EDS) of the sample obtained with the process of electrochemical synthesis of silver(II) sulphate(VI) of the invention.**

| **Element** | **Weight contents** | **Atomic contents** | **Error** |
|---|---|---|---|
| | | | |
| silver | 57,43% | 19,81% | 1,89% |
| sulphur | 16,16% | 18,75% | 0,59% |
| oxygen | 26,42% | 61,44% | 3,19% |

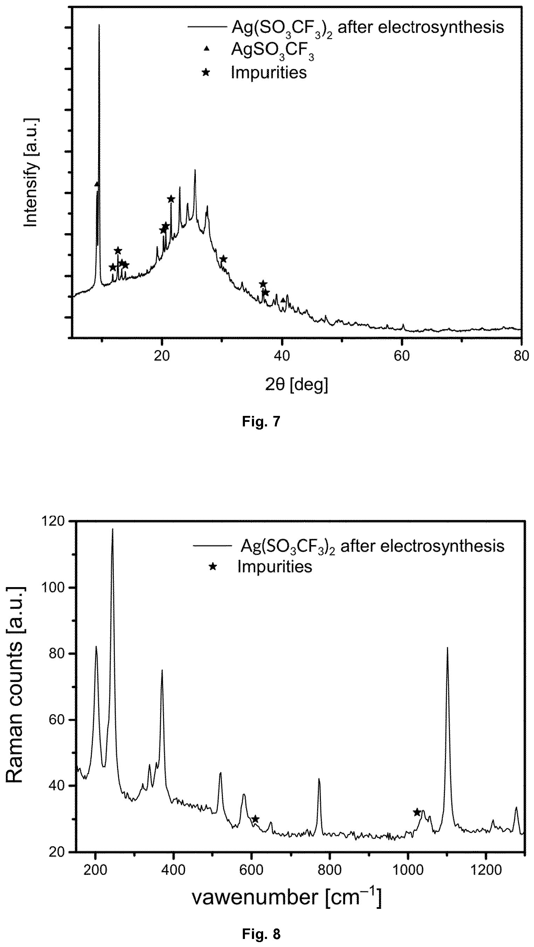

**Example 2** Electrosynthesis of silver(II) trifluoromethanesulfonate(VI) was carried out according to the invention, and in accordance with the procedure in Example 1. The electrolysis was performed in a glass. The apparatus consisted of a glass four-necked heart-shaped flask. The apparatus was washed with a 10% solution of peroxosulphuric(VI) acid in sulphuric(VI) acid and then washed with deionized distilled water and dried at 150°C. System used three electrodes: working electrode (EC) made of a fluorine-doped indium tin oxide (FTO), counter electrode (CE) was a sheet of metal platinum, reference electrode (REF): saturated silver sulphate electrode in 100% sulfuric(VI) acid with 815 mV potential relative to the normal hydrogen electrode (NHE). A working electrode was placed directly into a glass flask, and the reference and auxiliary electrode were placed in glass tubes, separated from the primary reaction space by sintered glass. Silver(I) trifluoromethanesulfonate(VI) was added in 98% trifluoromethanosulfonate(VI) acid. The reaction system was tightly closed and the protective atmosphere of sulfur hexafluoride (VI) was applied. The electrolysis was conducted at a potential in the range 2.6-4.8V relative to the normal hydrogen electrode (NHE) at 20°C. During the process, the transparent surface of the working electrode stained orange, and then, with the continuation of the process and increasing the thickness of the synthesized product it went dark brown. After completion of the electrolysis product was washed twice with 98% aqueous trifluoromethanesulfonate(VI) acid which was evaporated using a vacuum apparatus. The resulting product was subjected to spectroscopic and structural analyses. The results of analyzes are shown in Figures 7 and 8. The reaction product was identified as silver trifluoromethanesulfonate(VI). No significant significant amounts of impurities where detected in the product.

**Example 3** Electrosynthesis of silver(II) nitrate(V) was carried out according to the invention, in accordance with the procedure in Example 1 using nitric(V) acid at a concentration of 100%. Since it contained nitrogen oxides the acid was reddish. Therefore before using it, acid was subjected to ozonolysis to remove nitrogen oxides yielding colorless 100% nitric(V) acid. Electrolysis was carried out at -35°C in a glass apparatus. After the electrosynthesis, the resulting dark brown product was washed with 100% nitric acid at -35°C and dried under high vacuum at -30°C. The product was identified as silver(II) nitrate.

**Example 4** Electrosynthesis of silver(II) fluorosuphate(VI) was carried out according to the invention, and in accordance with the procedure in Example 1, using fluorosulphuric(VI) acid at a concentration of 95%. Electrolysis was carried out at 20°C in an apparatus made of perfluorinated materials. After reaction, the resulting product of electrosyntesis was almost black. It was washed with 100% fluorosulphuric(VI) acid and dried in vacuum. The product was identified as silver(II) fluorosulphate(VI) polluted with silver(I/II) fluorosulphate(VI).

**Example 5** The process of electrolysis of invention, according to the procedure outlined in Example 1, was performed with silver(I) hydrogen selenate(VI) in a melt of selenic(VI) acid at a concentration of 85%. Electrolysis was carried out at 65°C in a glass apparatus. After the electrosynthesis, obtained product was washed with aqueous solutions of selenic(VI) acid at a concentration gradually decreasing from 85% to 0%. The product was then dried under high vacuum at 20°C. The product was identified as silver(II) selenate(VI).

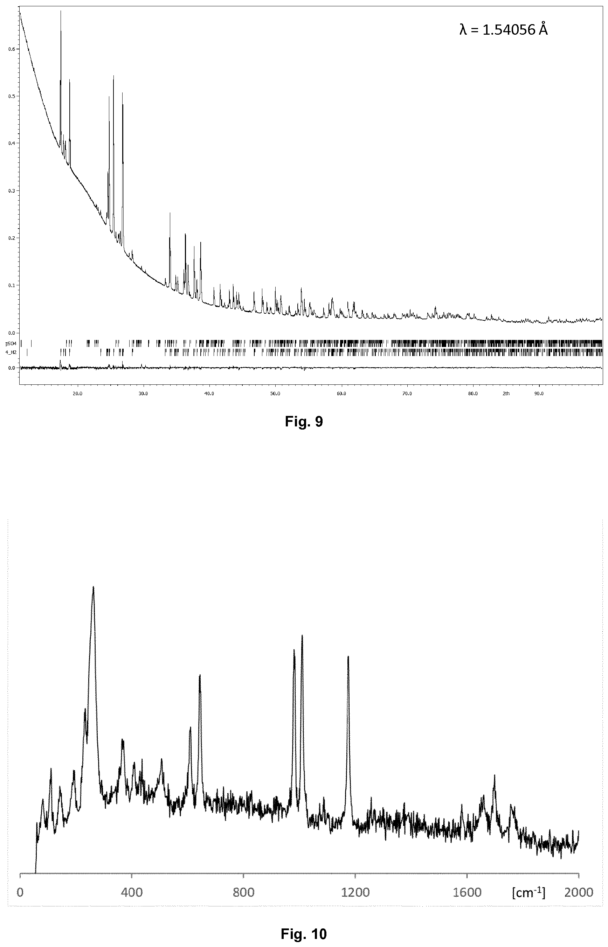

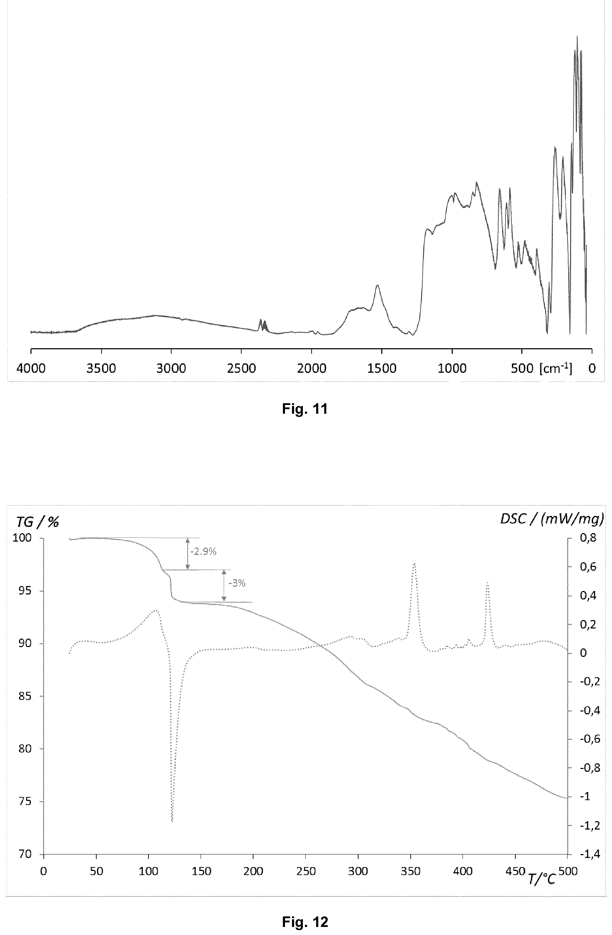

**Example 6.** Silver(II) sulphate(VI) hydrate was prepared from silver(II) sulphate obtained electrochemically by the method described in Example 1. Silver(II) sulphate(VI) was subjected to atmospheric moisture at room temperature. Exposure was carried out for 48 hours. The resulting product was subjected to chemical, spectroscopic and structural analysis. The results of analyzes are shown in Figures 9, 10, 11 and 12. The product was identified as AgSO₄×H₂O.

**Example 7.** The synthesis was performed to electrochemically prepare silver(II) selenate(VI) hydrate by the method described in Example 5. Silver(II) selenate(VI) was exposed to water vapour at a temperature ranging from 20°C to 30°C. Exposure to water vapour was carried for 24 hours. The resulting product was identified as a silver(II) selenate(VI) hydrate.

**Example 8** Silver(II) triflate was used as a redox reagent in the process of oxidative activation of C-H and C-C bonds of n-hexane in a reaction between 0.2 mmol of Ag(OTf)₂ and 1 ml of n-hexane. The reaction was carried out for 5 minutes in a glassware stirred continuously under an argon atmosphere. Products were identified by GC-MS using a HP-5MS column heated to a temperature of 300°C. Dehydrogenation and cracking was observed and the sp³-sp³ coupling and cyclization (carbon ring formation) leading to the formation of isomeric dodecane and 1,1'-di-(cyclohexane) - compounds of molar masses of 166.30 g/mol. The reaction yield calculated from GC-MS measurement was 5%. The results of analyzes are shown in Table 2.

**Example 9** Silver(II) triflate was used as a redox reagent in the process of oxidative activation of C-H and C-C bonds of cyclohexane in a reaction between 0.2 mmol Ag(OTf)₂ and 1 ml of cyclohexane. The reaction was carried out for 5 minutes in a glassware stirred continuously under an argon atmosphere. Products were identified by GC-MS using a HP-5MS column heated to a temperature of 300°C. Dehydrogenation and cracking were observed and the sp³-sp³ coupling and ring breaking (opening the ring carbon) leading to the formation of 2-methyl-hex-1-ene, metyl cyclohexane and methyl cyclohexene - compounds of molar masses respectively 100,30 g / mol, 98.19 g / and 96.17 g mol / mol. The reaction yield calculated from GC-MS measurement was 15%. The results of analyzes are shown in Table 2.

**Example 10.** Silver(II) sulfate(VI) hydrate was used as a redox reagent in the process of oxidative activation of C-H bonds of cyclohexane in a reaction between 0.2 mmol AgSO₄×H₂O and 0.1 mmol of cyclohexane in 1 ml of hexafluoro-2-propanol (HFIP). The reaction was carried out for 72 hours in glassware stirred continuously under an argon atmosphere. Products were identified by GC-MS using a HP-5MS column heated to a temperature of 300°C. Observed dehydrogenation and subsequent sp³-sp³ coupling led to the formation of 1,1'-di (cyclohexane) - a compound with molecular weight 166.30 g/mol. The reaction yield calculated from GC-MS measurement was 5%. The results of analyzes are shown in Table 2.

**Example 11.** Silver(II) sulphate(VI) hydrate was used as a redox reagent in the process of oxidative activation of C-H and C-C bonds in n-octane in a reaction between 0.2 mmol AgSO₄×H₂O and 0.1 mmol of n-octane in 1 ml of hexafluoro-2-propanol (HFIP). The reaction was carried out for 72 hours in glassware stirred continuously under an argon atmosphere. Products were identified by GC-MS using a HP-5MS column heated to a temperature of 300°C. There were cracking, dehydrogenation, sp³-sp³ coupling and cyclization leading to the formation of 6-metyl dodecane, 2,3-dimetyl undecane and propyl cyclopentane - compounds having a molecular weight respectively 112.21 g/mol, 156.31 g/mol and 170.33 g/mol. The reaction yield calculated from GC-MS measurement was 5%. The results of analyzes are shown in Table 2.

**Example 12.** Silver(II) sulfate(VI) hydrate was used as a redox reagent in the process of oxidative activation of C-H and C-C bonds in 2,2,3-trimethyl pentane in a reaction between 0.2 mmol AgSO₄×H₂O and 0.1 mmol of 2,2,3-trimethyl pentane in 1 ml of hexafluoro-2-propanol (HFIP). The reaction was carried out for 72 hours in glassware stirred continuously under an argon atmosphere. Products were identified by GC-MS using a HP-5MS column heated to a temperature of 300°C. There were cracking, isomerization and sp³-sp³ coupling leading to the formation methyl cyclohexane, 2,2-dimethyl pentane, 2,5-dimethyl hexane, 2,3,4-trimethyl pentane, 2,2,4-trimethyl hexane, 2,5-dimethyl heptane, 2, 2,4-trimethyl heptane, 3,3,5-trimethyl heptane 2,2,5-trimethyl decene, 2,2,8-trimethyl decane, 2,2,9-trimethyl decane, 2,2,4,6,6, -pentamethyl heptane and 2,2,11,11-tetramethyl docane. The reaction yield calculated from GC-MS measurement was 15%. The results of analyzes are shown in Table 2.

**Example 13.** Silver(II) sulphate(VI) hydrate was used as a redox reagent in the process of oxidative activation of C-H and C-C bonds in 2,2,3,3 tetramethyl buthane in a reaction between 0.2 mmol AgSO₄×H₂O and 0.1 mmol of 2,2,3,3-tetrametyl buthane in 1 ml of hexafluoro-2-propanol (HFIP). The reaction was carried out for 72 hours in glassware stirred continuously under an argon atmosphere. Products were identified by GC-MS using a HP-5MS column heated to a temperature of 300°C. Observed cracking and the sp³-sp³ coupling led to the formation of 3-methyl octane. The reaction yield calculated from GC-MS measurement was 5%. The results of analyzes are shown in Table 2.

**Example 14.** Silver(II) sulphate(VI) hydrate was used as a redox reagent in the process of oxidative activation of C-H bonds of cyclohexene in a reaction between 0.2 mmol AgSO₄×H₂O, and 1 ml of pure over P₄O₁₀ dried cyclohexene. The reaction was carried out for 72 hours in glassware stirring continuously under an argon atmosphere. Products were identified by GC-MS using a HP-5MS column heated to a temperature of 300°C. There were a sp³-sp³ coupling, cyclization and dehydrogenation creating cykloheksyl benzene. The reaction yield calculated from GC-MS measurement was 5%. The results of analyzes are shown in Table 2.

**EXAMPLE 15** Silver(II) triflate was used as a reagent in the process of oxidative activation of C-H bonds of 1-octene in a reaction between 0.06 mmol of Ag(OTf)₂ and 1 ml of pure 1-octene dried over molecular sieves 4A. The reaction was carried out for 5 minutes in a glassware stirred continuously under an argon atmosphere. Products were identified by GC-MS using a HP-5MS column heated to a temperature of 300°C. The isomerization of 1-octene to 2-octene and C-C couplings were observed, leading to the formation of isomeric hexadecane, C₁₆H₃₂ - the compounds with molar masses of 224.42 g/mol. The reaction yield calculated from GC-MS measurement was 5%. The results of analyzes are shown in Table 2.

**Example 16.** Silver(II) sulphate(VI) hydrate was used as a reagent in the process of dehydrogenation of 1,1',1",3,3',3"- hexafluoro-i-propanol in a reaction between 0.2 mmol AgSO₄ × H2O and 1 ml of hexafluoro-2-propanol (HFIP), dried on 4A molecular sieves. The reaction was carried out for 72 hours in glassware stirred continuously under an argon atmosphere. Products were identified by GC-MS using a HP-5MS column heated to a temperature of 300°C. Observed dehydrogenation of hexafluoro-2-propanol led to hexafluoro-2-propanone. The reaction yield calculated from GC-MS measurement was 5%. The results of analyzes are shown in Table 2.

**Example 17.** Silver(II) triflate was used as a redox reagent in the process of oxidative activation of C-H and C-C bonds of cyclohexane in a reaction between 0.2 mmol of Ag(OTf)₂ and 1 ml of cyclohexane. The reaction was carried out for 5 minutes in a glass flow reactor in order to make silver(II) triflate to react with vapours of cyclohexane. Products were identified by GC-MS using a HP-5MS column heated to a temperature of 300°C. Observed dehydrogenation and cracking and subsequent sp³-sp³ coupling led to the formation of 2-methyl-hex-1-ene, methyl cykoheksane and methyl cyclohexene - compounds of molar masses respectively 100.30 g/mol, 98.19 g/mol and 96.17 g/mol. The reaction yield calculated from GC-MS measurement was 2%. The results of analyzes are shown in Table 2.

**Example 18. S**ilver(II) sulphate(VI) hydrate was used as a redox reagent in the process of oxidative activation of C-H and C-C bonds of of benzene in a reaction between 0.1 mmol AgSO₄×H₂O and 1 ml of benzene. The reaction was carried out for 2 minutes in a glass reactor. Products were identified by GC-MS using a HP-5MS column heated to a temperature of 300°C. Dehydrogenation and cracking were observed leading to the formation of carbon dioxide and water (absorbed by sulphuric(VI) acid. The reaction yield calculated from GC-MS measurement was 2%. The results of analyzes are shown in Table 2.

**Example 19** Electrochemically in situ generated silver(II) hydrogensulfate(VI) in 96% sulphuric(VI) acid was used as a redox reagent in the process of oxidative activation of C-H and C-C bonds in 1,2-dichlorobenzene. This organic compound is one of the pesticides and is on the list of persistent organic pollutants (POPs). The reaction was carried out in an electrochemical way using a solution of 50 mM silver(I) bisulphate(VI) and 0.5 M of 1,2-dichlorobenzene in 96% sulphuric(VI) acid to generate in situ complexes of silver(II) bisulfate(VI), with a potential of 2.2 V. Products were identified by DEMS (Differential Electrochemical Mass Spectrometry). Dehydrogenation and cracking were observed leading to the formation of carbon dioxide and water (absorbed by sulfuric(VI) acid). The results of analyzes are shown in Table 2.

**Table 2. Retention times (from smallest to largest) recorded on GC-MS Agilent 7890 & 5975 spectrometer with HP 5MS column, of reaction products of the isomerization, dehydrogenation, cracking and coupling obtained in Examples 8-19.**

| **obtained product** | **Example No** | **molar mass (g/mol)** | **retention time (min)** |
|---|---|---|---|
| | | | |
| hexafluoro-2-propanone | 16 | 166.02 | 1.339 |
| 2-methyl-heks-1-en | 9,17 | 100.30 | 2.617 |
| methyl cyklohexene | 9,17 | 96.17 | 3.666 |
| methyl cyklohexane | 9,12,17 | 98.19 | 3.904 |
| 2,5-dimethyl hexane | 12 | 114.23 | 4.054 |
| 2,2-dimethyl pentane | 12 | 100.21 | 4.106 |
| 2,3,4-trimethyl pentane | 12 | 114.23 | 4.513 |
| 2,2,4-trimethyl hexane | 12 | 128.26 | 5.491 |
| propyl cyklopentane | 11 | 170.33 | 6.973 |
| 2-octene | 15 | 112.24 | 6.655 |
| 2,5-dimethyl heptane | 12 | 128.26 | 7.037 |
| 2,2,4-trimethyl heptane | 12 | 142.29 | 8.391 |
| 3,3,5-trimethyl heptane | 12 | 142.29 | 8.700 |
| 2,2,5-trimethyl decane | 12 | 184.36 | 10.155 |
| 2,2,8-trimethyl decane | 12 | 184.36 | 10.604 |
| 2,2,4,6,6,-pentamethyl heptane | 12 | 170.33 | 10.613 |
| 2,2,9-trimethyl decane | 12 | 184.36 | 10.622 |
| 2,2,11,11-tetramethyl dodecane | 12 | 226.44 | 11.442 |
| 2,3-dimethyl undecane | 11 | 156.31 | 13.023 |
| 6-metyl decane | 11 | 112.21 | 13.099 |
| 3-metyl octane | 13 | 128.25 | 13.116 |
| dodecadiens (mixture) | 8 | 166.30 | 14.090-15.060 |
| 1,1'-di(cykloheksan) | 8,10 | 166.30 | 16.061 |
| cykloheksyl benzene | 14 | 158.24 | 16.088 |
| C₁₆H₃₂ (izomer 1) | 15 | 224.42 | 18.176 |
| C₁₆H₃₂ (izomer 2) | 15 | 224.42 | 18.300 |

**Example 20** Silver(II) sulphate(VI) monohydrate was used as a reagent in the homo-coupling of 1-chloronaphtalene in reaction between 0.1 mmol 1-chloronaphtalene and 0.2 mmol AgSO₄×H₂O in a solvent of 1,1,1-trifluoroethanol and hexafluoroisopropanol at a volume ratio of 1: 1. The reaction was carried out 72 hours in glassware, stirred continuously at room temperature under argon. The reaction mixture was filtered to remove the solid reaction products and excess AgSO₄·H₂O. The reaction mixture was separated on a preparative thin-layer chromatography plate using n-hexane as eluent. Products were identified by GC-MS. The structure was confirmed by recording spectra ¹H NMR, ¹³C NMR and ¹H-¹³C HSQY 2D NMR at room temperature using CDCl₃ as solvent. 1,1'-dichlorobis naftyl (coupling product sp²-sp²) with a yield of 72% (yield determined from GC-MS measurements) was obtained.

**Example 21** Process of homo-coupling of 1- chloronaphtalene was carried out in the presence of AgSO₄. The reaction proceeded between 0.1 mmol 1-chloronaphtalene and 0.2 mmol AgSO₄. As a reaction medium, organic solvent mixture of 1,1,1-trifluoroethanol and hexafluoroisopropanol at a volume ratio of 1: 1 was used. The reaction was carried out 72 hours in glassware. During the reaction the mixture was stirred continuously with a magnetic stirrer, using a mixing element coated with a layer of PTFE. The reaction was conducted at room temperature under argon. After completion of the coupling reaction, mixture was filtered through a PTFE filter having a pore size of 0.45 µm to remove solid reaction products and excess of AgSO₄. The reaction mixture was separated on a preparative thin-layer chromatography plate using n-hexane as eluent. Products were identified by GC-MS. The structure was confirmed by recording ¹H NMR, ¹³C NMR and ¹H-¹³C HSQY 2D NMR spectra at room temperature using CDCl₃ as solvent. The procces gave 1,1'-dichlorobisnaphtalene (coupling product sp²-sp²) in 75% yield (yield calculated from GC-MS measurements). The results of analyzes are shown in Table 3.

**Example 22** Homo-coupling process of 1-chloronaphtalene was carried out in the presence of AgSO₄. Reaction proceeded between 0.1 mmol 1-chloronaphtalene and 0.2 mmol AgSO₄. As the reaction medium hexafluoroisopropanol was used. The reaction was carried out 72 hours in glassware. The reaction mixture was treated with ultrasound (sonication) in a laboratory ultrasonic bath for 60 minutes. During the reaction the mixture was stirred continuously with a magnetic stirrer, using a mixing element coated with a layer of PTFE. The reaction was conducted at room temperature under argon. After completion of the coupling reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS. The structure was confirmed by recording ¹H NMR, ¹³C NMR and ¹H-¹³C HSQY 2D NMR spectra at room temperature using CDCl₃ as solvent. The process gave 1,1'-dichlorobis naphtalene (coupling product sp²-sp²) with a yield of 17.5% (yield determined from GC-MS measurements). The results of analyzes are shown in Table 3.

**Example 23** Homo-coupling process of 1-chloronaphtalene was carried out in the presence of AgSO₄. The reaction was taken between 0.1 mmol 1-chloronaphtalene and 0.2 mmol AgSO₄. As the reaction medium hexafluoroisopropanol was used. The reaction was carried out 72 hours in an apparatus made of PTFE. During the reaction the mixture was stirred continuously with a magnetic stirrer, using a mixing element coated with a layer of PTFE. The reaction was performed at room temperature under argon. The reaction mixture was subjected to microwave irradiation for 15 minutes. After completion of the coupling, reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS, and ¹H NMR, ¹³C NMR and ¹H-¹³C HSQY 2D NMR spectroscopy at room temperature using CDCl₃ as solvent. Process gave 1,1'-dichlorobis naftyl (coupling product sp²-sp²) in 6% yield (yield determined from GC-MS measurements). The results of analyzes are shown in Table 3.

**Example 24** Homo-coupling process of 1- chloronaphtalene was carried out in the presence of AgSO₄. The reaction was taken between 0.1 mmol 1-chloronaphtalene and 0.2 mmol AgSO₄. As the reaction medium hexafluoroisopropanol was used. The reaction was carried out 72 hours in a quartz apparatus. During the reaction the mixture was continuously mixed on a magnetic stirrer using a mixing element coated with a layer of PTFE. The reaction was conducted at room temperature under argon. The reaction mixture was exposed to UV radiation for 60 minutes. After completion of the coupling, reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS, and ¹H NMR, ¹³C NMR and ¹H-¹³C HSQY 2D NMR spectroscopy at room temperature using CDCl₃ as solvent. Process gave 1,1'-dichlorobis naftyl (coupling product sp²-sp²) in 6% yield (yield determined from GC-MS measurements). The results of the analyzes are summarized in Table 3.

**Example 25** The process of homo-coupling of naphthalene was carried out in the presence of AgSO₄. Reaction was taken between 1 mmol of naphthalene and 1 mmol AgSO₄. As the reaction medium cyclohexane was used. The reaction was carried out 72 hours in glassware. During the reaction mixture was continuously mixed on a magnetic stirrer using a mixing element coated with a layer of PTFE. The reaction was conducted at room temperature under argon. After completion of the coupling, reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS, and ¹H NMR, ¹³C NMR and ¹H-¹³C HSQY 2D NMR spectroscopy at room temperature using CDCl₃ as solvent. Process gave the isomeric naphthalene dimers (sp²-sp² conjugates) 1,1-binaphthyl and 1,2-binaphthyl in yields of 6.5% and 1.5%. The reaction forms also trimeric naphthalene 1,1', 4',1 "-trinaftyl (coupling product sp²-sp²) in a yield of 1.5% (yield determined from GC-MS measurements). The results of analyzes are shown in Table 3.

**Example 26** Process of homo-coupling of 2,3,5,6- tetrafluorotoluene was carried out in the presence of AgSO₄. The reaction proceeded between 0.1 mmol 2,3,5,6-tetrafluorotoluene and 0.1 mmol AgSO₄. As the reaction medium cyclohexane was used. The reaction was carried out 72 hours in glassware. During the reaction the mixture was continuously mixed on a magnetic stirrer using a mixing element coated with a layer of PTFE. The reaction was conducted at room temperature under argon. After completion of the coupling, reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS. Products were identified by GC-MS, and ¹H NMR, ¹³C NMR and ¹H-¹³C HSQY 2D NMR spectroscopy at room temperature using CDCl₃ as solvent. Process yields 1,1'-bis (2,3,5,6-tetrafluorofenylo)ethane (coupling product sp³-sp³) in a yield of 0.7%. The reaction forms also 1,2,4,5-tetrafluoro-3-methyl-6-(2,3,5,6-tetrafluorobenzylo) benzene (coupling product sp³-sp²) in a yield of 0.35% (yield calculated from GC-MS measurements). The results of the analyzes in Table 3.

**Example 27** The process of cross-coupling of fluoronaphthalene and bromonaphthalene was carried out in the presence of AgSO₄. Reaction proceeded between 0.1 mmol fluoronapthalene, 0.1 mmol bromonaphthalene and 0.2 mmol AgSO₄. As reaction medium hexafluoroisopropanol was used. The reaction was carried out 72 hours in glassware. During the reaction the mixture was continuously mixed on a magnetic stirrer using a mixing element coated with a layer of PTFE. The reaction was conducted at room temperature under argon. After completion of the coupling, reaction mixture was then filtered through a PTFE filter having a pore size of 0.45 µm to remove the solid reaction products and excess AgSO₄. The reaction mixture was separated on a preparative thin-layer chromatography plate using n-hexane as eluent. Products were identified by GC-MS, and ¹H NMR, ¹³C NMR and ¹H-¹³C HSQY 2D NMR spectroscopy at room temperature using CDCl₃ as solvent. Process gave 1-bromo-1'-fluorobis naftyl (coupling product sp²-sp²) in 25% yield (yield calculated from GC-MS measurements). The results of the analyzes are summarized in Table 3.

**Example 28** The process of homo-coupling of 1-bromo-3-fluorobenzene was carried out in the presence of AgSO₄. Reaction proceeded between excess of 1-bromo-3-fluorobenzene and 0.1 mmol AgSO₄. As reaction medium, substituting 1-bromo-3-fluorobenzene was used. The reaction was carried out 72 hours in glassware. During the reaction the mixture was continuously mixed on a magnetic stirrer using a mixing element coated with a layer of PTFE. The reaction was conducted at room temperature under argon. The reaction mixture was separated and identified by GC-MS. Process yielded 1,1'-difluoro-3,3'-dibromobifenyl, 1,1',1"- trifluoro-3,3',3"-tribromoterfenyl and 1,1',1",1‴-tetrafluoro-3,3',3",3‴-tetrabromo tetraphenyl (coupling products sp²-sp²) with a yield of 10% (yield determined from GC-MS measurements). The reaction showed the existence of a process of self-sustaining free radical oligomerization reaction (autocatalysis). The results of analyzes are shown in Table 3.

**Example 29** The process of homo-coupling of 1-chloronaphtalene carried out in the presence of AgSO₄ and BF₃·O(C₂H₅)₂. Reaction proceeded between 0.1 mmol 1-chloronaphtalene, 0.1 mmol AgSO₄ and 0.1 mmol BF₃·O(C₂H₅)₂. As the reaction medium hexafluoroisopropanol was used. The reaction was carried out 72 hours in glassware. During the reaction the mixture was continuously mixed on a magnetic stirrer using a mixing element coated with a layer of PTFE. The reaction was performed at room temperature under argon. The reaction mixture was separated and identified by GC-MS. Process yielded 1,1'-dichlorobis naphtyls (conjugates sp²-sp²) with a yield of the order of 24% (yield determined from GC-MS measurements). The results of analyzes are shown in Table 3.

**Table 3. Retention times recorded with spectrometer GC-MS Agilent 7890 & 5975 HP 5MS column, for the coupling reaction products obtained in Examples 21-29.**

| **product obtained** | **example No** | **retention time (min)** |
|---|---|---|
| | | |
| 1,1 '-binaftyl | 25 | 26.765 |
| 1,1',4',1"-trinaftyl | 25 | 38.460 |
| 1,1'-dichlorobinaftyl | 21-24,29 | 28.861 |
| 1-bromo-1'-fluorobinaftyl | 27 | 29.196 |
| 1,1'-bis(2,3,5,6-tetrafluorofenylo)etan | 26 | 18.108 |
| 1,1'-difluoro-3,3'-dibromobifenyl | 28 | 20.674 |
| 1,1',1",1‴-tetrafluoro-3,3',3",3‴-tetrabromotetrarphenyl | 28 | 36.885 |

## Claims

1. A process for electrochemical synthesis of the fine-crystalline silver(II) salts, in a system comprising at least two electrodes: a working electrode and a counter electrode, wherein the electrolysis of the silver(I) salt or a hydrogensalt of silver(I) in the acid solution containing the same anion as the electrolysed salt is carried out in the concentrated acid solution, **characterised in that,** high purity and very high crystallinity salts of silver(II) and inorganic oxoanion or oxofluoroanion of non-metal element in high oxidation state, preferably of non-metal such as C(IV), N(V), P(V), S(VI), Se(VI), Te(VI), Cl(VII), Br(VII) and I(VII) are obtained, provided that the acid solution with a concentration over 80%, preferably greater than or equal to 95% is used, and/or the acceptable contamination of the acid is water, an anhydride of the acid, or other solvent forming solutions of the corresponding silver(I) salt and the acid, optionally with the addition of electrolyte, wherein fine-crystalline silver(II) salts having the crystallite size in the range of at least 20-500 microns in length are formed.

2. The process for electrochemical synthesis according to claim 1, **characterised in that** in the system used the working electrode is an electrode made of a material with high chemical resistance to acid environment and to the high cathodic and anodic polarization, preferably of doped tin oxide ITO or FTO, doped boron nitride BDD, glassy carbon, graphite, lead(IV) oxide PbO₂, platinum, iridium, rhodium or ruthenium, and/or the electrolysis is carried out at highly anodic potential, at potential higher than 2.0 V relative to a standard hydrogen electrode (NHE), preferably at potential higher than 2.5 V relative to a standard hydrogen electrode (NHE), and/or in an inert atmosphere, preferably under argon or nitrogen, preferably with the surface of solution covered a layer of with sulphur(VI) hexafluoride, and/or at a temperature providing a liquid state of the acid used and in the range of thermal stability of the electrolysis products, preferably at a temperature from -50°C to +150°C.

3. The process for electrochemical synthesis according to claim 1, **characterised in that** the electrolysis is carried out in the acid solution containing an addition of an electrolyte, preferably salts of alkali metal, ammonium or phosphonium salts of the anion of the acid used in the electrolysis, and/or the electrolysis product is washed with a liquid solution of the acid used during the electrolysis, preferably with a distilled acid solution, where the acceptable contamination is water or an anhydride of the acid.

4. The process for electrochemical synthesis according to claims 1-3, **characterised in that** the following silver(II) salts are prepared using the corresponding silver(I) salt or silver(I) hydrogensalt in the acid solution, the acid having the same oxoanion or oxofluoroanion as the produced salts:
• silver(II) nitrate(V), or silver(I/II) nitrate(V) via the electrolysis of silver(I) nitrate(V), AgNO₃ in a solution of nitric(V) acid, HNO₃;
• silver(II) metaphosphate(V), or silver (I/II) metaphosphate via the electrolysis of silver(I) metaphosphate(V), AgPO₃ in a solution of metaphosphoric(V) acid HPO₃;
• silver(II) orthophosphate(V), silver (I/II) orthophosphate(V) via the electrolysis of silver(I) orthophosphate(V), Ag₃PO₄, or silver(I) hydrogen orthophosphate(V), Ag₂HPO₄ or silver(I) dihydrogen phosphate(V), AgH₂PO₄ in a solution of ortophosphoric(V) acid H₃PO₄;
• silver(II) sulphate or silver(I/II) sulphate(VI) via the electrolysis of silver(I) sulphate(VI), Ag₂SO₄, or silver(I) hydrogen sulphate(VI), AgHSO₄ in a solution of sulphuric(VI) acid, H₂SO₄;
• silver(II)selenate(VI), or silver(I/II) selenate(VI) via the electrolysis of silver(I) selenate(VI), Ag₂SeO₄ or silver(I) hydrogen selenate(VI), AgHSeO₄ in selenium(VI) acid, H₂SeO₄;
• silver(II) chlorate(VII) or silver(I/II) chlorate(VII) via the electrolysis of silver(I) chlorate(VII), AgClO₄ in a solution of chloric(VII) acid, HClO₄;
• silver(II) bromate or silver(I/II) bromate(VII) via the electrolysis of silver(I) bromate(VII), AgBrO₄ in a solution of bromic(VII) acid, HBrO₄;
• silver(II) iodate(VII) or silver(I/II) iodate(VII) via the electrolysis of silver(I) iodate(VII), AgIO₄ in a solution of iodic acid (VII), HIO₄;
• silver(II) trifluoroacetate or silver (I/II) trifluoroacetate via the electrolysis of silver(I) trifluoroacetate AgCOOCH₃ in a solution of trifluoroacetic acid, CF₃COOH;
• silver(II) trifluoromethanesulfonate(VI) *(triflate),* or silver(I/II) trifluoromethanesulfonate(VI) *(triflate)* via electrolysis of silver(I) trifluoromethanesulfonate(VI) *(triflate),* AgSO₃CF₃, in a solution of trifluoromethanesulfuric(VI) acid *(triflic),* HSO₃CF₃;
• silver(I)) perfluorobenzene sulfonate or silver(I/II) perfluoro benzene sulfonate via electrolysis of silver(I) perfluorobenzene sulfonate C₆F₅SO₃Ag in a solution of perfluorobenzenesulfonic acid, C₆F₅SO₃H;
• silver(II) perfluoronaphtalene sulfonate or silver(I/II) perfluoro naphtalenesulfonate via electrolysis of silver(I) perfluoronaphtalenesulfonate C₁₀F₇SO₃Ag in a solution of perfluoronaphtalenesulfonic acid, C₁₀F₇SO₃H;
• silver(II) methanesulfonate or silver(I/II) methanesulfonate via the electrolysis of silver(I) methanesulfonate AgSO₃CH₃, in a solution of methanesulfonic acid HSO₃CH₃;
• silver(II) benzenesulfonate, or silver(I/II) benzenesulfonate via the electrolysis of silver(I) benzenesulfonate C₆H₅SO₃Ag in a solution of benzenesulfonic acid, C₆H₅SO₃H;
• silver(II) naphtalenesulfonate or silver(/II) naphtalenesulfonate via electrolysis of silver(I) naphtalenesulfonate C₁₀H₇SO₃Ag in a solution of naphtalene sulfonic acid, C₁₀H₇SO₃H;
• silver(II) salts of higher perfluorosulfonic and sulfonic acids of type CₙF₂ₙ₊₁SO₃H, CₙH₂ₙ₊₁SO₃H, Nafion^{®} or derivatives thereof, or a silver(I/II) salts of higher perfluorosulfonic and sulfonic acids of type CₙF₂ₙ₊₁SO₃H, CₙH₂ₙ₊₁SO₃H, Nafion^{®} or derivatives thereof, via the electrolysis of silver(I) salts of higher perfluorosulfonic and sulfonic acids CₙF₂ₙ₊₁SO₃H, CₙH₂ₙ₊₁SO₃H, Nafion^{®} or derivatives thereof, in solutions of higher perfluorosulfonic and sulfonic acids of type CₙF₂ₙ₊₁SO₃H, CₙH₂ₙ₊₁SO₃H, Nafion^{®} or derivatives thereof;
• silver(II) salt of (CF₃)₂POOH or a silver(I/II) salt of (CF₃)₂POOH via the electrolysis of the silver(I) salt of AgPOO(CF₃)₂, in the of (CF₃)₂POOH acid solution,
• silver(II) difluoroortophosphate(V) or silver (I/II) difluoroortophosphate(V) via the electrolysis of silver(I) difluoroortophospahte(V), AgPO₂F₂, in the difluoroortophosphoric(V) acid, HPO₂F₂, solution;
• silver(II) fluorosulphate(VI) or silver(I/II) fluorosulphate via the electrolysis of silver(I) fluorosulphate(VI), AgSO₃F, in the fluorosulfuric(VI) acid, HSO₃F, solution;
• silver(II) fluoroselenate(VI) or silver(I/II) fluoroselenate(VI) via the electrolysis of silver(I) fluoroselenate(VI) , AgSeO₃F, in fluoroselenic(VI) acid, HSeO₃F, solution;
• silver(II) pentafluorooxotellurate (teflate) or silver (I/II) pentafluorooxotellurate(VI) (*teflate*) via the electrolysis of silver(I) pentafluoroxsotellurate(VI) (*teflate*) AgOTeF₅, in the pentafluorooxotelluric(VI) acid *(teflic),* TeF₅OH, solution.

5. A method of synthesizing hydrates of silver(II) salts, **characterised in that** it comprises a controlled exposure of the silver(II) or silver(I/II) salts prepared by the process of claim 1 to liquid water, ice or water vapor, with control of hydratation process parameters such as at least reaction temperature, the physical state of water, air humidity, length of exposure, concentration of reactants, wherein the obtained hydrates of silver(II) salts have a water content in the range 0.5-5.0 molecules of water per each atom of silver(II).

6. The method of synthesizing hydrates according to claim 5, **characterised in that** the gas water vapor solution is used having the water vapor content in the range of 0-100 g/m³, preferably 5-20 g/m³, where the exposure to water vapour is carried out for 1-200 hours, preferably for 40-50 hours, and the exposure to water vapour is carried out at a temperature ranging from -50°C to +100°C, preferably at 20-30°C.

7. The method of synthesizing hydrates according to claim 5, **characterised in that** the finely dispersed liquid water is used.

8. The method of synthesizing hydrates according to claim 5, **characterised in that** ice is used, wherein the mixture of silver(II) salt with ice is comminuted mechanically in a suitable stoichiometric ratio, and then slowly heated to a temperature above 0°C, unless the salt is decomposed at a temperature above 0°C .

9. The method of synthesizing hydrates according to claim 5, **characterised in that** the silver(II) salts or mixed valence silver(I/II) salts obtained by electrochemical method according to claims 1-4 are used, i.e. silver(II) nitrate(V), silver(I/II) nitrate(V), silver(II) metaphosphate(V), silver(I/II) metaphosphate(V), silver(I/II) orthophosphate(V), silver(II) ortophosphate(V), silver(I/II) sulphate, silver(II) sulphate, silver(I/II) selenate(V), silver(II)selenate(V), silver(I/II) chlorate(VII), silver(II) chlorate(VII), silver (I/II) bromate(VII), silver(II) bromate(VII), silver(I/II) iodidate(VII), silver(II) iodate(VII), silver(I/II) fluorosulfate(VI), silver(II) fluorosulfate(VI), silver(I/II) difluoroortophosphate(V), silver(II) difluoroortophospahe(V), silver(I/II) fluoroselenate(VI), silver(II) fluoroselenate(VI), silver(I/II) trifluoroacetate, silver(II) trifluoroacetate, silver(I/II), silver(I/II) trifluoromethanate *(triflate),* silver(II) trifluoromethanate *(triflate),* silver(I/II) pentafluorooxotellurate(VI) (*teflate*), silver(II) pentafluoroxotellurate(VI) (*teflate*), silver(I/II) perfluoro benzeneosulfonate, silver(II) perfluoro benzenesulfonate, silver(I/II) perfluoro naphtalenesulfonate, silver(II) perfluoro naphtalenesulfonate, silver(I/II) methanesulfonate, silver(II) methanesulfonate, silver(I/II) benzenesulfonate, silver(II) benzenesulfonate, silver(I/II) naphtalenesulfonate, silver(II) naphtalenesulfonate, and silver(II) and silver(I/II) salts of higher perfluorosulfonic and sulfonic acids CₙF₂ₙ₊₁SO₃H, CₙH₂ₙ₊₁SO₃H, or Nafion^{®} or derivatives thereof, and similar, and silver(II) salts of (CF₃)₂POOH and silver(I/II) salts of (CF₃)₂POOH.

10. The silver(II) salts hydrate selected from the group comprising: silver(II) nitrate(V) hydrate, silver(I/II) nitrate(V) hydrate, silver(II) metaphosphate(V) hydrate, silver(I/II) metaphosphate(V) hydrate, silver(I/II) orthophosphate(V) hydrate, silver(II) orthophosphate(V) hydrate, silver(I/II) sulphate hydrate, silver(II) sulphate hydrate, silver(I/II) selenate(V) hydrate, silver(II) selenate(V) hydrate, silver(I/II) chlorate(VII) hydrate, silver(II) chlorate(VII) hydrate, silver (I/II) bromate(VII) hydrate, silver(II) bromate(VII) hydrate, silver(I/II) iodidate(VII) hydrate, silver(II) iodate(VII) hydrate, silver(I/II) fluorosulfate(VI) hydrate, silver(II) fluorosulfate(VI) hydrate, silver(I/II) difluoroortophosphate(V) hydrate, silver(II) difluoroortophospahe(V) hydrate, silver(I/II) fluoroselenate(VI) hydrate, silver(II) fluoroselenate(VI) hydrate, silver(I/II) trifluoroacetate hydrate, silver(II) trifluoroacetate hydrate, silver(I/II) trifluoromethanate hydrate *(triflate),* silver(II) trifluoromethanate hydrate *(triflate),* silver(I/II) pentafluorooxotellurate(VI) hydrate (*teflate*), silver(II) pentafluoroxotellurate(VI) hydrate (*teflate*), silver(I/II) perfluoro benzeneosulfonate hydrate, silver(II) perfluoro benzenesulfonate hydrate, silver(I/II) perfluoro naphtalenesulfonate hydrate, silver(II) perfluoro naphtalenesulfonate hydrate, silver(I/II) methanesulfonate hydrate, silver(II) methanesulfonate hydrate, silver(I/II) benzenesulfonate hydrate, silver(II) benzenesulfonate hydrate, silver(I/II) naphtalenesulfonate hydrate, silver(II) naphtalenesulfonate hydrate, and hydrates of silver(II) and silver(I/II) salts of higher perfluorosulfonic and sulfonic acids CₙF₂ₙ₊₁SO₃H, CₙH₂ₙ₊₁SO₃H, or Nafion^{®} or derivatives thereof, and hydrate of silver(II) salt of (CF₃)₂POOH and hydrate of silver (I/II) salt of (CF₃)₂POOH.

11. A method of modifying a structure of organic compounds molecules using an oxidising agent and taking place in solid, liquid or gaseous environment, in particular in organic environment, **characterised in that** as the oxidative initiation agent in the direct reaction of isomerization, dehydrogenation, cracking and/or coupling of the modified molecules, a redox reagent is used, which reagent comprises at least one silver(II) compound, and starting from the existing structure and/or functional groups of the molecules to be modified and avoiding their prior functionalization, processing and/or activation while preserving the existing functional groups, wherein the processes take place separately, simultaneously and/or sequentially, and/or the redox reagent is used in a molar ratio ranging from 0.01/1.0 to 10.0/1.0 with respect to the conjugated organic compounds, based on the molar content of silver(II), preferably in a molar ratio of 0.5 / 1.0 to 2.0 / 1.0, and/or the reaction medium there is used directly a gaseous or liquid organic reagent, or a solution of the organic reagent in an organic solvent or mixture of organic solvents, preferably a single phase (gas or liquid) mixture, multiphase mixture, emulsion or aerosol, wherein the organic solvents are hydrocarbons (aliphatic, cyclic and aromatic), fluoro-hydrocarbons (aliphatic, cyclic and aromatic), perfluorocarbons (aliphatic, alkylcyclic and aromatic), fluoroalcohols (primary, secondary and tertiary), perfluoroalkoholes (primary, secondary and tertiary), fluoroamines (primary, secondary and tertiary), perfluoroamines (primary, secondary and tertiary), fluoroesters (aliphatic, alkylcyclic and aromatic), perfluoroesters (aliphatic, alkylcyclic and aromatic), fluoroethers (aliphatic, alkylcyclic and aromatic), perfluoroethers (aliphatic, alkylcyclic and aromatic), halogen derivatives of alkanes, fluorinated ionic liquids, perfluorinated ionic liquids, sulfuric(VI) acid, oleum or other acids of the same oxoanions and fluoroxoanions as a silver(II) salt used, and single-phase, multi-phase mixtures or emulsions thereof, preferably hexafluoroisopropanol, nonafluorotertbutanol, cyclopentane, n-pentane, cyclohexane, n-hexane, dichloromethane, and mixtures thereof with other solvents.

12. The method of modifying a structure of organic compounds molecules according to claim 11, **characterised in that** the process is carried out in the absence of oxygen, preferably in a nitrogen or argon atmosphere, or in vacuum, and/or at temperatures of 200-400 K, preferably 270-350 K, and most preferably at room temperature, and/or in the apparatus of a material inert with respect to silver(II) compounds, preferably in glassware, the apparatus of the quartz, apparatus made of fluoropolymers, stainless steel, or in the apparatus laminated with glass, quartz, fluoropolymers or stainless steel, and/or using at least one of the following: a mechanical or magnetic stirrer, sonication, microwave acceleration and/or UV irradiation.

13. The method of modifying a structure of organic compounds molecules according to claim 11, **characterised in that** Lewis acid, preferably BF₃·O(C₂H₅)₂, is used, wherein the redox reagent comprising a silver(II) compound is in the same phase as the organic reagent, or the redox reagent comprising a silver(II) compound is in a different phase than the organic reagent and the chemical reaction takes place at the interface.

14. The method of modifying a structure of organic compounds molecules according to claims 11-13, **characterised in that** as the silver(II) compound there are used silver(II) or mixed valence silver(I/II) salts comprising oxoanions or oxofluoroanions, preferably silver(II) salts, in particular: silver(II) nitrate(V), silver(I/II) nitrate(V), silver(II) metaphosphate(V), silver(I/II) metaphosphate(V), silver(I/II) orthophosphate(V), silver(II) orthophosphate(V), silver(I/II) sulphate, silver(II) sulphate, silver(I/II) selenate(V), silver(II)selenate(V), silver(I/II) chlorate(VII), silver(II) chlorate(VII), silver(I/II) bromate(VII), silver(II) bromate(VII), silver(I/II) iodidate(VII), silver(II) iodate(VII), silver(I/II) fluorosulfate(VI), silver(II) fluorosulfate(VI), silver(I/II) difluoroortophosphate(V), silver(II) difluoroortophospahe(V), silver(I/II) fluoroselenate(VI), silver(II) fluoroselenate(VI), silver(I/II) trifluoroacetate, silver(II) trifluoroacetate, silver(I/II) trifluoromethanesulfonate *(triflate),* silver(II) trifluoromethanesulfonate *(triflate),* silver(I/II) pentafluorooxotellurate(VI) (*teflate*), silver(II) pentafluoroxotellurate(VI) (*teflate*), silver(I/II) perfluoro benzeneosulfonate, silver(II) perfluoro benzenesulfonate, silver(I/II) perfluoro naphtalenesulfonate, silver(II) perfluoro naphtalenesulfonate, silver(I/II) methanesulfonate, silver(II) methanesulfonate, silver(I/II) benzenesulfonate, silver(II) benzenesulfonate, silver(I/II) naphtalenesulfonate, silver(II) naphtalenesulfonate, and silver(II) and silver(I/II) salts of higher perfluorosulfonic and sulfonic acids CₙF₂ₙ₊₁SO₃H, CₙH₂ₙ₊₁SO₃H, or Nafion^{®} or derivatives thereof, and silver(II) salts of (CF₃)₂POOH and silver(I/II) salts of (CF₃)₂POOH or hydrates of these compounds, preferably silver(II) trifluorometanesulfonate(VI) *(triflate),* silver(II) fluorosulphate(VI), silver(I/II) fluorosulphate(VI), silver(II) sulphate(VI), and their hydrates, and/or as the silver(II) compound there is used a solution of a silver(II) salt, preferably silver(II) hydrogenbisulphate(VI) dissolved in a solution of sulfuric(VI) acid or oleum or a solution containing silver(II) ions generated *in situ* either chemically or electrochemically from suitable precursors directly in the reaction medium.

15. Use of silver(II) salts as redox reagents in the method of modifying a structure of organic compounds as described in the claims 11-14, preferably wherein the organic compounds being modified are hazardous wastes and/or organic toxic substances that need to be disposed, and/or the solid silver(II) compounds or their solution in concentrated acids are used.

## Patentansprüche

1. Verfahren zur elektrochemischen Synthese der feinkristallinen Silber(II)salze, in einem mindestens zwei Elektroden (eine Arbeitselektrode und eine Gegenelektrode) umfassenden System,
wobei die Elektrolyse des Silber(I)-salzes oder eines Hydrogensalzes von Silber (I) in der das gleiche Anion wie in der das elektrolysierte Salz enthaltenden Säurelösung, in der konzentrierten Säurelösung durchgeführt wird,
**dadurch gekennzeichnet, dass** hochreine und sehr hochkristalline Salze von Silber(II) und anorganischem Oxoanion oder Oxofluoranion eines in hoher Oxidationsstufe vorliegenden Nichtmetallelements, vorzugsweise Nichtmetalls, wie C(IV), N(V), P(V), S(VI), Se(VI), Te(VI), CI(VII), Br(VII) und I(VII), erhalten werden,
unter der Voraussetzung, dass die Säurelösung mit einer Konzentration von über 80 %, vorzugsweise größer oder gleich 95 %, verwendet wird
und/oder
die akzeptable Verunreinigung der Säure Wasser, ein Säureanhydrid oder andere lösungsmittelbildende Lösungen des entsprechenden Silber(I)salzes und der Säure, gegebenenfalls unter Zusatz von Elektrolyt, ist,
wobei die feinkristallinen Silber(II)salze mit einer Kristallitgröße im Bereich von mindestens 20-500 Mikrometer Länge gebildet werden.

2. Verfahren zur elektrochemischen Synthese nach Anspruch 1, **dadurch gekennzeichnet, dass**
in dem verwendeten System die Arbeitselektrode eine Elektrode aus einem Material mit hoher chemischer Beständigkeit gegenüber saurer Umgebung und hoher kathodischer und anodischer Polarisation, vorzugsweise aus dotiertem Zinnoxid ITO oder FTO, dotiertem Bornitrid BDD, Glaskohlenstoff, Graphit, Blei(IV)-oxid PbO₂, Platin, Iridium, Rhodium oder Ruthenium,
ist
und/oder
die Elektrolyse bei hochanodischem Potential, bei einem Potential höher als 2,0 V relativ zu einer Standard-Wasserstoffelektrode (NHE), vorzugsweise bei einem Potential höher als 2,5 V relativ zu einer Standard-Wasserstoffelektrode (NHE), und/oder in einer inerten Atmosphäre, vorzugsweise unter Argon oder Stickstoff, vorzugsweise mit einer Lösungsoberfläche, die mit einer Schwefel(VI)hexafluoridschicht bedeckt ist, und/oder bei einer Temperatur, die einen flüssigen Zustand der verwendeten Säure bereitstellt, und die im Bereich der thermischen Stabilität der Elektrolyseprodukte liegt, vorzugsweise bei einer Temperatur von -50°C bis +150°C,
durchgeführt wird.

3. Verfahren zur elektrochemischen Synthese nach Anspruch 1, **dadurch gekennzeichnet, dass** die Elektrolyse in der Säurelösung, die einen Zusatz eines Elektrolyten, vorzugsweise Alkalisalze, Ammonium- oder Phosphoniumsalze des Anions der in der Elektrolyse verwendeten Säure enthält, durchgeführt wird
und/oder das Elektrolyseprodukt mit einer flüssigen Lösung der während der Elektrolyse verwendeten Säure, vorzugsweise mit einer destillierten Säurelösung gewaschen wird, wobei die akzeptable Verunreinigung Wasser oder ein Säureanhydrid ist.

4. Verfahren zur elektrochemischen Synthese nach den Ansprüchen 1-3, **dadurch gekennzeichnet, dass** die folgenden Silber(II)salze unter Verwendung des entsprechenden Silber(I)salzes oder Silber(I)hydrogensalzes in der Säurelösung hergestellt werden, wobei die Säure dasselbe Oxoanion oder Oxofluoranion als die hergestellten Salze aufweist:
• Silber(II)nitrat(V) oder Silber(I/II)nitrat(V) durch die Elektrolyse von Silber(I)nitrat(V), AgNO₃ in einer Lösung von Salpeter(V)säure, HNO₃;
• Silber(II)metaphosphat(V) oder Silber(I/II)metaphosphat durch die Elektrolyse von Silber(I)metaphosphat(V), AgPO₃ in einer Lösung von Metaphosphor(V)säure, HPO₃;
• Silber(II)orthophosphat(V), Silber(I/II)orthophosphat(V) durch die Elektrolyse von Silber(I)orthophosphat(V), Ag₃PO₄ oder Silber(I)hydrogenorthophosphat(V), Ag₂HPO₄ oder Silber(I)dihydrogenphosphat(V), AgH₂PO₄ in einer Lösung von Orthophosphor(V)säure H₃PO₄;
• Silber(II)sulfat(VI) oder Silber(I/II)sulfat(VI) durch die Elektrolyse von Silber(I)sulfat(VI), Ag₂SO₄, oder Silber(I)hydrogensulfat(VI), AgHSO₄ in einer Lösung von Schwefelsäure(VI), H₂SO₄;
• Silber(II)selenat(VI) oder Silber(I/II)selenat(VI) durch die Elektrolyse von Silber(I)selenat(VI), Ag₂SeO₄ oder Silber(I)hydrogenselenat(VI), AgHSeO₄ in Selen(VI)säure, H₂SeO₄;
• Silber(II)chlorat(VII) oder Silber(I/II)chlorat(VII) durch die Elektrolyse von Silber(I)chlorat(VII), AgClO₄ in einer Lösung von Chlor(VII)säure, HClO₄;
• Silber(II)bromat oder Silber(I/II)bromat(VII) durch die Elektrolyse von Silber(I)bromat(VII), AgBrO₄ in einer Lösung von Brom(VII)säure, HBrO₄;
• Silber(II)jodat(VII) oder Silber(I/II)jodat(VII) durch die Elektrolyse von Silber(I)jodat(VII), AgIO₄ in einer Lösung von Jodsäure (VII), HlO₄;
• Silber(II)trifluoracetat oder Silber(I/II)trifluoracetat durch die Elektrolyse von Silber(I)trifluoracetat AgCOOCH₃ in einer Lösung von Trifluoressigsäure, CF₃COOH;
• Silber(II)trifluormethansulfonat(VI) (Triflat) oder Silber(I/II)trifluormethansulfonat(VI) (Triflat) durch die Elektrolyse von Silber(I)trifluormethansulfonat(VI) (Triflat), AgSO₃CF₃, in einer Lösung von Trifluormethanschwefelsäure(VI) (triflic), HSO₃CF₃;
• Silber(II)perfluorbenzolsulfonat oder Silber(I/II)perfluorbenzolsulfonat durch die Elektrolyse von Silber(I)perfluorbenzolsulfonat C₆F₅SO₃Ag in einer Lösung von Perfluorbenzolsulfonsäure, C₆F₅SO₃H;
• Silber(II)perfluornaphthalinsulfonat oder Silber(I/II)perfluornaphthalinsulfonat durch die Elektrolyse von Silber(I)perfluornaphthalinsulfonat C₁₀F₇SO₃Ag in einer Lösung von Perfluornaphthalinsulfonsäure, C₁₀F₇SO₃H;
• Silber(II)methansulfonat oder Silber(I/II)methansulfonat durch die Elektrolyse von Silber(I)methansulfonat AgSO₃CH₃ in einer Lösung von Methansulfonsäure HSO₃CH₃;
• Silber(II)benzolsulfonat oder Silber(I/II)benzolsulfonat durch die Elektrolyse von Silber(I)benzolsulfonat C₆H₅SO₃Ag in einer Lösung von Benzolsulfonsäure, C₆H₅SO₃H;
• Silber(II)naphtalinsulfonat oder Silber(I/II)naphtalinsulfonat durch die Elektrolyse von Silber(I)naphtalinsulfonat C₁₀H₇SO₃Ag in einer Lösung von Naphtalinsulfonsäure, C₁₀H₇SO₃H;
• Silber(II)salze höherer Perfluorsulfon- und Sulfonsäuren des Typs CₙF₂ₙ₊₁SO₃H, CₙH₂ₙ₊₁SO₃H, Nafion^{®} oder Derivate davon, oder Silber(I/II)salze höherer Perfluorsulfon- und Sulfonsäuren des Typs CₙF₂ₙ₊₁SO₃H, CₙH₂ₙ₊₁SO₃H, Nafion^{®} oder Derivate davon, durch die Elektrolyse von Silber(I)salzen höherer Perfluorsulfon- und Sulfonsäuren CₙF₂ₙ₊₁SO₃H, CₙH₂ₙ₊ᵢSO₃H, Nafion^{®} oder Derivate davon, in Lösungen von höheren Perfluorsulfon- und Sulfonsäuren vom Typ CₙF₂ₙ₊₁SO₃H, CₙH₂ₙ₊₁SO₃H, Nafion^{®} oder Derivate davon;
• Silber(II)salz von (CF₃)₂POOH oder ein Silber(I/II)salz von (CF₃)₂POOH durch die Elektrolyse des Silber(I)salzes von AgPOO(CF₃)₂ in einer Lösung von Säure (CF₃)₂POOH,
• Silber(II)difluorortophosphat(V) oder Silber(I/II)difluorortophosphat(V) durch die Elektrolyse von Silber(I)difluorortophosphat(V), AgPO₂F₂, in einer Lösung von Difluorortophosphor(V)säure, HPO₂F₂;
• Silber(II)fluorsulfat(VI) oder Silber(I/II)fluorsulfat durch die Elektrolyse von Silber(I)fluorsulfat(VI), AgSO₃F, in einer Lösung von Fluorschwefel(VI)säure, HSO₃F;
• Silber(II)fluorselenat(VI) oder Silber(I/II)fluorselenat(VI) durch die Elektrolyse von Silber(I)fluorselenat(VI), AgSeO₃F, in einer Lösung von Fluorselen(VI)säure, HSeO₃F;
• Silber(II)pentafluoroxotellurat (Teflat) oder Silber(I/II)pentafluoroxotellurat(VI) (Teflat) durch die Elektrolyse von Silber(I)pentafluoroxotellurat(VI) (Teflat) AgOTeF₅, in einer Lösung von Pentafluoroxotellur(VI)säure (Teflic), TeF₅OH.

5. Verfahren zur Synthese von Hydraten von Silber(II)salzen, **dadurch gekennzeichnet, dass** es ein kontrolliertes Aussetzen der nach dem Verfahren des Anspruchs 1 hergestellten Silber(II)- oder Silber(I/II)-salze an flüssiges Wasser, Eis oder Wasserdampf, unter Steuerung von Hydratationsprozessparametern, wie zumindest Reaktionstemperatur, physikalischer Zustand des Wassers, Luftfeuchtigkeit, Expositionsdauer, Konzentration von Reaktanden, umfasst, wobei die erhaltenen Hydrate von Silber(II)salzen einen Wassergehalt im Bereich von 0,5-5,0 Wassermoleküle pro Silberatom (II) aufweisen.

6. Verfahren zur Synthese von Hydraten nach Anspruch 5, **dadurch gekennzeichnet, dass** die Gaswasserdampflösung mit einem Wasserdampfgehalt im Bereich von 0-100 g/m³, vorzugsweise 5-20 g/m³, eingesetzt wird, wobei das Aussetzen an Wasserdampf für 1-200 Stunden, vorzugsweise für 40-50 Stunden, durchgeführt wird, und das Aussetzen an Wasserdampf bei einer Temperatur im Bereich von -50°C bis +100°C, vorzugsweise bei 20-30°C, durchgeführt wird.

7. Verfahren zur Synthese von Hydraten nach Anspruch 5, **dadurch gekennzeichnet, dass** ein feindisperses flüssiges Wasser verwendet wird.

8. Verfahren zur Synthese von Hydraten nach Anspruch 5, **dadurch gekennzeichnet, dass** Eis verwendet wird, wobei die Mischung von Silber(II)salz mit Eis in einem geeigneten stöchiometrischen Verhältnis mechanisch zerkleinert wird und dann langsam auf eine Temperatur über 0°C erhitzt wird, wenn nicht, das Salz bei einer Temperatur über 0°C zersetzt.

9. Verfahren zur Synthese von Hydraten nach Anspruch 5, **dadurch gekennzeichnet, dass** die durch elektrochemisches Verfahren nach den Ansprüchen 1-4 erhaltenen Silber(II)salze oder gemischtvalenten Silber(I/II)salze, also Silber(II)nitrat (V), Silber(I/II)nitrat(V), Silber(II)metaphosphat(V), Silber(I/II)metaphosphat(V), Silber(I/II)orthophosphat(V), Silber(II)orthophosphat(V), Silber(I/II)sulfat, Silber(II)sulfat, Silber(I/II)selenat(V), Silber(II)selenat(V), Silber(I/II)chlorat(VII), Silber(II)chlorat(VII), Silber(I/II)bromat(VII), Silber(II)bromat(VII), Silber(I/II)jodat(VII), Silber(II)jodat(VII), Silber (I/II)fluorsulfat(VI), Silber(II)fluorsulfat(VI), Silber(I/II)difluorortophosphat(V), Silber(II)difluorortophosphat(V), Silber(I/II)fluorselenat(VI), Silber(II)fluorselenat(VI), Silber(I/II)trifluoracetat, Silber(II)trifluoracetat, Silber(I/II)trifluormethanat (Triflat), Silber(II)trifluormethanat (Triflat), Silber(I/II)pentafluoroxotellurat(VI) (Teflat), Silber(II)pentafluoroxotellurat(VI) (Teflat), Silber(I/II)perfluorbenzolsulfonat, Silber(II)perfluorbenzolsulfonat, Silber(I/II)perfluornaphthalinsulfonat, Silber(II)perfluornaphthalinsulfonat, Silber(I/II)methansulfonat, Silber(II)methansulfonat, Silber(I/II)benzolsulfonat, Silber(II)benzolsulfonat, Silber(I/II)naphthalinsulfonat, Silber(II)naphthalinsulfonat, und Silber(II)- und Silber(I/II)-salze von höheren Perfluorsulfon- und Sulfonsäuren CₙF₂ₙ₊₁SO₃H, CₙH₂ₙ₊₁SO₃H oder Nafion^{®} oder Derivate davon und ähnliche und Silber(II)salze von (CF₃)₂POOH und Silber(I/II)salze von (CF₃)₂POOH, verwendet werden.

10. Das Silber(II)salz-hydrat ausgewählt aus der Gruppe umfassend: Silber(II)nitrat(V)-hydrat, Silber(I/II)nitrat(V)-hydrat, Silber(II)metaphosphat(V)-hydrat, Silber(I/II)metaphosphat(V)-hydrat, Silber(I/II)orthophosphat(V)-hydrat, Silber(II)orthophosphat(V)-hydrat, Silber(I/II)sulfat-hydrat, Silber(II)sulfat-hydrat, Silber(I/II)selenat(V)-hydrat, Silber(II)selenat(V)-hydrat, Silber(I/II)chlorat(VII)-hydrat, Silber(II)chlorat(VII)-hydrat, Silber(I/II)bromat(VII)-hydrat, Silber(II)-bromat(VII)-hydrat, Silber(I/II)-jodat(VII)-hydrat, Silber(II)jodat(VII)-hydrat, Silber(I/II)fluorsulfat(VI)-hydrat, Silber(II)fluorsulfat(VI)-hydrat, Silber(I/II)difluorortophosphat(V)-hydrat, Silber(II)difluorortophosphat(V)-hydrat, Silber(I/II)fluorselenat(VI)-hydrat, Silber(II)fluorselenat(VI)-hydrat, Silber(I/II)trifluoracetat-hydrat, Silber(II)trifluoracetat-hydrat, Silber(I/II)trifluormethanat-hydrat (Triflat), Silber(II)trifluormethanat-hydrat (Triflat), Silber(I/II)pentafluoroxotellurat(VI)-hydrat (Teflat), Silber(II)pentafluoroxotellurat(VI)-hydrat (Teflat), Silber(I/II)perfluorbenzolsulfonat-hydrat, Silber(II)perfluorbenzolsulfonat-hydrat, Silber(I/II)perfluornaphthalinsulfonat-hydrat, Silber(II)perfluornaphthalinsulfonat-hydrat, Silber(I/II)methansulfonat-hydrat, Silber(II)methansulfonat-hydrat, Silber(I/II)benzolsulfonat-hydrat, Silber(II)benzolsulfonat-hydrat, Silber(I/II)naphtalinsulfonat-hydrat, Silber(II)naphtalinsulfonat-hydrat und Hydrate von Silber(II)- und Silber(I/II)-salzen höherer Perfluorsulfon- und Sulfonsäuren CₙF₂ₙ₊₁SO₃H, CₙH₂ₙ₊₁SO₃H oder Nafion^{®} oder Derivate davon, und Hydrat von Silber(II)-salz von (CF₃)₂POOH und Hydrat von Silber(I/II)-salz von (CF₃) POOH.

11. Verfahren zum Modifizieren einer Struktur von Molekülen organischer Verbindungen unter Verwendung eines Oxidationsmittels und erfolgend in fester, flüssiger oder gasförmiger Umgebung, insbesondere in organischer Umgebung, **dadurch gekennzeichnet, dass** als oxidativer Initiator in der direkten Reaktion von Isomerisierung, Dehydrierung, Cracken und/oder Koppeln der modifizierten Moleküle, ein Redoxreagenz verwendet wird, das mindestens eine Silber(II)verbindung enthält, und die Reaktion ausgehend von der bestehenden Struktur und/oder funktionellen Gruppen der zu modifizierenden Moleküle und unter Vermeidung ihrer vorherigen Funktionalisierung, Prozessierung und/oder Aktivierung unter Erhalt der vorhandenen funktionellen Gruppen durchgeführt wird, wobei die Prozesse getrennt, gleichzeitig und/oder sequentiell ablaufen und/oder das Redoxreagenz in einem molaren Verhältnis von 0,01/1,0 bis 10,0/1,0 hinsichtlich die konjugierten organischen Verbindungen, bezogen auf den molaren Gehalt an Silber(II), vorzugsweise in einem molaren Verhältnis von 0,5 / 1,0 bis 2,0 / 1,0, eingesetzt wird, und/oder dabei als das Reaktionsmedium direkt ein gasförmiges oder flüssiges organisches Reagenz oder eine Lösung des organischen Reagenz in einem organischen Lösungsmittel oder Gemisch organischer Lösungsmittel, vorzugsweise ein einphasiges (Gas oder Flüssigkeit) Gemisch, mehrphasiges Gemisch, eine Emulsion oder ein Aerosol verwendet wird, wobei die organischen Lösungsmittel Kohlenwasserstoffe (aliphatisch, cyclisch und aromatisch), Fluorkohlenwasserstoffe (aliphatisch, cyclisch und aromatisch), Perfluorkohlenwasserstoffe (aliphatisch, alkylcyclisch und aromatisch), Fluoralkohole (primär, sekundär und tertiär), Perfluoralkohole (primär, sekundär und tertiär), Fluoramine (primär, sekundär und tertiär), Perfluoramine (primär, sekundär und tertiär), Fluorester (aliphatisch, alkylcyclisch und aromatisch), Perfluorester (aliphatisch, alkylcyclisch und aromatisch), Fluorether (aliphatisch, alkylcyclisch und aromatisch), Perfluorether (aliphatisch, alkylcyclisch und aromatisch), Halogenderivate von Alkanen, fluorierte ionische Flüssigkeiten, perfluorierte ionische Flüssigkeiten, Schwefel(VI)säure, Oleum oder andere Säuren die gleichen Oxoanionen und Fluoroxoanionen wie in dem verwendeten Silber(II)salz enthalten, sowie einphasige, mehrphasige Mischungen oder Emulsionen davon, vorzugsweise Hexafluorisopropanol, Nonafluor-tert.-butanol, Cyclopentan, n-Pentan, Cyclohexan, n-Hexan, Dichlormethan und Mischungen davon mit anderen Lösungsmitteln, sind.

12. Verfahren zum Modifizieren einer Struktur von Molekülen organischer Verbindungen nach Anspruch 11, **dadurch gekennzeichnet, dass** das Verfahren in Abwesenheit von Sauerstoff, vorzugsweise in einer Stickstoff- oder Argon-atmosphäre, oder im Vakuum und/oder bei Temperaturen von 200-400 K, bevorzugt 270-350 K, und am bevorzugtesten bei Raumtemperatur, und/oder in der Apparatur aus einem gegenüber Silber(II)-Verbindungen inerten Material, bevorzugt in Glaswaren, der Apparatur aus Quarz, Apparatur aus Fluorpolymeren, Edelstahl, oder in der mit Glas, Quarz, Fluorpolymeren oder Edelstahl laminierten Vorrichtung, und/oder unter Verwendung von mindestens einem der Folgenden: einem mechanischen oder magnetischen Rührer, Beschallung, Mikrowellenbeschleunigung und/oder UV-Bestrahlung, durchgeführt wird.

13. Verfahren zum Modifizieren einer Struktur von Molekülen organischer Verbindungen nach Anspruch 11, **dadurch gekennzeichnet, dass** eine Lewis-Säure, vorzugsweise BF₃-O(C₂H₅)₂, verwendet wird, wobei das Redox-Reagenz, das eine Silber(II)-Verbindung umfasst, in dasselber Phase wie das organische Reagenz enthalten ist oder das Redox-Reagenz, das eine Silber(II)-Verbindung umfasst, sich in einer anderen Phase als das organische Reagenz befindet und die chemische Reaktion an der Grenzfläche stattfindet.

14. Verfahren zum Modifizieren einer Struktur von Molekülen organischer Verbindungen nach den Ansprüchen 11-13, **dadurch gekennzeichnet, dass** als Silber(II)verbindung Silber(II)- oder gemischtvalente Silber(I/II)salze, die Oxoanionen oder Oxofluoranionen umfassen, vorzugsweise Silber(II)salze, insbesondere: Silber(II)nitrat(V), Silber(I/II)nitrat(V), Silber(II)metaphosphat(V), Silber(I/II)metaphosphat(V), Silber(I/II)orthophosphat(V), Silber(II)orthophosphat(V), Silber(I/II)sulfat, Silber(II)sulfat, Silber(I/II)selenat(V), Silber(II)selenat(V), Silber(I/II)chlorat(VII), Silber(II)chlorat(VII), Silber(I/II)bromat(VII), Silber(II)bromat(VII), Silber(I/II)jodat(VII), Silber(II)jodat(VII), Silber(I/II)fluorsulfat(VI), Silber(II)fluorsulfat(VI), Silber(I/II)difluorortophosphat(V), Silber(II)difluorortophosphat(V), Silber(I/II)fluorselenat(VI), Silber(II)fluorselenat(VI), Silber(I/II)trifluoracetat, Silber(II)trifluoracetat, Silber(I/II)trifluormethansulfonat (Triflat), Silber(II)trifluormethansulfonat (Triflat), Silber(I/II)pentafluoroxotellurat(VI) (Teflat), Silber(II)pentafluoroxotellurat(VI) (Teflat), Silber(I/II)perfluorbenzolsulfonat, Silber(II)perfluorbenzolsulfonat, Silber(I/II)perfluornaphthalinsulfonat, Silber(II)perfluornaphthalinsulfonat, Silber(I/II)methansulfonat, Silber(II)methansulfonat, Silber(I/II)benzolsulfonat, Silber(II)benzolsulfonat, Silber(I/II)naphthalinsulfonat, Silber(II)naphthalinsulfonat und Silber(II)- und Silber(I/II)-salze von höheren Perfluorsulfon- und Sulfonsäuren CₙF₂ₙ₊₁SO₃H, CₙH₂ₙ₊₁SO₃H oder Nafion^{®} oder Derivate davon und Silber(II)salze von (CF₃)₂POOH und Silber(I/II)salze von (CF₃)₂POOH oder Hydrate dieser Verbindungen, vorzugsweise Silber(II)trifluormetansulfonat(VI) (Triflat), Silber(II)fluorsulfat(VI), Silber(I/II)fluorsulfat(VI), Silber(II)sulfat(VI) und deren Hydrate verwendet werden und/oder als Silber(II)-verbindung eine Lösung eines Silber(II)salzes, vorzugsweise Silber(II)hydrogenbisulfat(VI), gelöst in einer Lösung von Schwefel(VI)säure oder Oleum oder eine Lösung, die Silber(II)ionen enthält, die in situ entweder chemisch oder elektrochemisch aus geeigneten Vorstufen direkt im Reaktionsmedium erzeugt werden, verwendet wird.

15. Verwendung von Silber(II)salzen als Redoxreagenzien in dem Verfahren zum Modifizieren einer Struktur von organischen Verbindungen, wie in den Ansprüchen 11-14 beschrieben, wobei vorzugsweise die zu modifizierenden organischen Verbindungen gefährliche Abfälle und/oder organische toxische Substanzen sind, die entsorgt werden müssen und/oder die festen Silber(II)-verbindungen oder deren Lösung in konzentrierten Säuren eingesetzt werden.

## Revendications

1. Procédé de synthèse électrochimique des sels d'argent(II) finement cristallins, dans un système comprenant au moins deux électrodes: une électrode de travail et une contre-électrode, dans lequel l'électrolyse du sel d'argent(l) ou d'un sel hydrogéné d'argent (I) dans la solution acide contenant le même anion que le sel électrolysé est effectuée dans la solution acide concentrée, **caractérisée en ce que** des sels d'argent(II) de haute pureté et de très haute cristallinité et d'oxoanion inorganique ou d'oxofluoroanion d'élément non métallique à haut degré d'oxydation, de préférence en non-métal tel que C(IV), N(V), P(V), S(VI), Se(VI), Te(VI), CI(VII), Br(VII) et I(VII), sont obtenus, sous réserve d'utiliser la solution acide de concentration supérieure à 80%, de préférence supérieure ou égale à 95%, et/ou la contamination acceptable de l'acide est l'eau, un anhydride de l'acide ou d'autres solutions formant un solvant du sel d'argent(l) correspondant et de l'acide, éventuellement avec addition d'électrolyte, où des sels d'argent(II) finement cristallins ayant une taille de cristallite dans la plage d'au moins 20 à 500 microns de longueur sont formés.

2. Procédé de synthèse électrochimique selon la revendication 1, **caractérisé en ce que** dans le système utilisé l'électrode de travail est une électrode en un matériau à haute résistance chimique au milieu acide et à la forte polarisation cathodique et anodique, de préférence en oxyde d'étain dopé ITO ou FTO, nitrure de bore dopé BDD, carbone vitreux, graphite, oxyde de plomb(IV) PbO₂, platine, iridium, rhodium ou ruthénium, et/ou l'électrolyse est effectuée à un potentiel fortement anodique, à un potentiel supérieur à 2,0 V par rapport à une électrode standard à hydrogène (NHE), de préférence à potentiel supérieur à 2,5 V par rapport à une électrode standard à hydrogène (NHE), et/ou sous atmosphère inerte, de préférence sous argon ou azote, de préférence avec la surface de solution recouverte d'une couche de l'hexafluorure de soufre(VI), et/ou à une température assurant un état liquide de l'acide utilisé et dans la gamme de stabilité thermique des produits d'électrolyse, de préférence à une température de -50°C à +150°C.

3. Procédé de synthèse électrochimique selon la revendication 1, **caractérisé en ce que** l'électrolyse est effectuée dans la solution acide contenant un ajout d'un électrolyte, de préférence des sels de métaux alcalins, des sels d'ammonium ou de phosphonium de l'anion de l'acide utilisé dans la électrolyse, et/ou le produit d'électrolyse est lavé avec une solution liquide de l'acide utilisé lors de l'électrolyse, de préférence avec une solution d'acide distillé, la contamination acceptable étant l'eau ou un anhydride de l'acide.

4. Procédé de synthèse électrochimique selon les revendications 1 à 3, **caractérisé en ce que** les sels d'argent(II) suivants sont préparés en utilisant le sel d'argent(l) ou le sel hydrogéné d'argent(l) correspondant dans la solution acide, l'acide ayant la même oxoanion ou oxofluoroanion sous forme de sels produits:
• nitrate(V) d'argent(II), ou nitrate(V) d'argent(I/II) par électrolyse de nitrate(V) d'argent(I), AgNO₃ dans une solution d'acide nitrique(V), HNO₃;
• métaphosphate(V) d'argent(II) ou métaphosphate d'argent(I/II) via l'électrolyse du métaphosphate(V) d'argent(I), AgPO₃, dans une solution d'acide métaphosphorique(V) HPO₃;
• orthophosphate(V) d'argent(II), orthophosphate(V) d'argent(I/II) via l'électrolyse de l'orthophosphate(V) d'argent(I), Ag₃PO₄ ou l'hydrogénoorthophosphate (V) d'argent(I), Ag₂HPO₄ ou dihydrogénophosphate (V) d'argent(I), AgH₂PO₄ dans une solution d'acide ortophosphorique (V) H₃PO₄;
• sulfate(VI) d'argent(II) ou sulfate(VI) d'argent(I/II) via l'électrolyse de sulfate(VI) d'argent(I), Ag₂SO₄, ou d'hydrogénosulfate(VI) d'argent(I), AgHSO₄ dans une solution d'acide sulfurique(VI), H₂SO₄;
• sélénate(VI) d'argent(II), ou sélénate(VI) d'argent(I/II) par électrolyse de sélénate(VI) d'argent(I), Ag₂SeO₄ ou sélénate(VI) d'hydrogène d'argent(I), AgHSeO₄ dans l'acide sélénique(VI), H₂SeO₄;
• chlorate(VII) d'argent(II) ou chlorate(VII) d'argent(I/II) par électrolyse de chlorate(VII) d'argent(I), AgClO₄ dans une solution d'acide chlorique(VII), HClO₄;
• bromate(VII) d'argent(II) ou bromate(VII) d'argent(I/II) par électrolyse de bromate(VII) d'argent(I), AgBrO₄ dans une solution d'acide bromique(VII), HBrO₄;
• iodate(VII) d'argent(II) ou iodate(VII) d'argent(I/II) par électrolyse de iodate(VII) d'argent(I), AgIO₄ dans une solution d'acide iodique (VII), HIO₄;
• trifluoroacétate d'argent(II) ou trifluoroacétate d'argent (I/II) par électrolyse de trifluoroacétate d'argent(l) AgCOOCH₃ dans une solution d'acide trifluoroacétique, CF₃COOH;
• trifluorométhanesulfonate(VI) (triflate) d'argent(II), ou trifluorométhanesulfonate(VI) (triflate) d'argent(I/II) par électrolyse du trifluorométhanesulfonate(VI) (triflate) d'argent(I), AgSO₃CF₃, dans une solution d'acide trifluorométhanesulfurique(VI) (triflique), HSO₃CF₃;
• sulfonate de perfluorobenzène d'argent(II) ou sulfonate de perfluorobenzène d'argent(I/II) par électrolyse de sulfonate de perfluorobenzène d'argent(l) C₆F₅SO₃Ag dans une solution d'acide perfluorobenzènesulfonique, C₆F₅SO₃H;
• perfluoronaphtalènesulfonate d'argent(II) ou perfluoronaphtalènesulfonate d'argent(I/II) par électrolyse du perfluoronaphtalènesulfonate d'argent(l) C₁₀F₇SO₃Ag dans une solution d'acide perfluoronaphtalènesulfonique, C₁₀F₇SO₃H;
• méthanesulfonate d'argent(II) ou méthanesulfonate d'argent(I/II) par électrolyse du méthanesulfonate d'argent(l) AgSO₃CH₃, dans une solution d'acide méthanesulfonique HSO₃CH₃;
• benzènesulfonate d'argent(II) ou benzènesulfonate d'argent(I/II) par électrolyse du benzènesulfonate d'argent(l) C₆H₅SO₃Ag dans une solution d'acide benzènesulfonique, C₆H₅SO₃H;
• naphtalènesulfonate d'argent(II) ou naphtalènesulfonate d'argent(I/II) par électrolyse du naphtalènesulfonate d'argent(l) C₁₀H₇SO₃Ag dans une solution d'acide naphtalènesulfonique, C₁₀H₇SO₃H;
• sels d'argent(II) d'acides perfluorosulfoniques et sulfoniques supérieurs de type CₙF₂ₙ₊₁SO₃H, CₙH₂ₙ₊₁SO₃H, Nafion^{®} ou leurs dérivés, ou sels d'argent(I/II) d'acides perfluorosulfoniques et sulfoniques supérieurs de type CₙF₂ₙ₊₁SO₃H, CₙH₂ₙ₊₁SO₃H, Nafion^{®} ou ses dérivés, par électrolyse de sels d'argent(l) des acides perfluorosulfoniques et sulfoniques supérieurs CₙF₂ₙ₊₁SO₃H, CₙH₂ₙ₊₁SO₃H, Nafion^{®} ou leurs dérivés, dans des solutions d'acides perfluorosulfoniques et sulfoniques supérieurs de type CₙF₂ₙ₊₁SO₃H, CₙH₂ₙ₊₁SO₃H, Nafion^{®} ou leurs dérivés;
• sel d'argent(II) de (CF₃)₂POOH ou un sel d'argent(I/II) de (CF₃)₂POOH par électrolyse du sel d'argent(l) de AgPOO(CF₃)₂, dans une solution d'acide (CF₃)₂POOH,
• difluoroortophosphate(V) d'argent(II) ou difluoroortophosphate(V) d'argent(I/II) par électrolyse de difluoroortophosphate(V) d'argent(I), AgPO₂F₂, dans une solution d'acide difluoroortophosphorique(V), HPO₂F₂;
• fluorosulfate(VI) d'argent(II) ou fluorosulfate(VI) d'argent(I/II) par électrolyse du fluorosulfate(VI) d'argent(I), AgSO₃F, dans une solution d'acide fluorosulfurique(VI), HSO₃F;
• fluorosélénate(VI) d'argent(II) ou fluorosélénate(VI) d'argent(I/II) par électrolyse de fluorosélénate(VI) d'argent(I), AgSeO₃F, dans une solution d'acide fluorosélénique(VI), HSeO₃F;
• pentafluorooxotellurate(VI) d'argent(II) (teflate) ou pentafluorooxotellurate(VI) d'argent (I/II) (teflate) par électrolyse de pentafluorooxotellurate(VI) (teflate) d'argent(l) AgOTeF₅, dans une solution d'acide pentafluorooxotellurique(VI) (teflic), TeF₅OH.

5. Procédé de synthèse d'hydrates de sels d'argent(II), **caractérisé en ce qu'**il comprend une exposition contrôlée des sels d'argent(II) ou d'argent(I/II) préparés par le procédé de la revendication 1 à de l'eau liquide, de la glace ou de l'eau vapeur, avec contrôle des paramètres du processus d'hydratation tels qu'au moins la température de réaction, l'état physique de l'eau, l'humidité de l'air, la durée d'exposition, la concentration des réactifs, dans lequel les hydrates de sels d'argent(II) obtenus ont une teneur en eau dans la plage de 0,5 à 5,0 molécules d'eau pour chaque atome d'argent(II).

6. Procédé de synthèse d'hydrates selon la revendication 5, **caractérisé en ce que** la solution de vapeur d'eau gazeuse est utilisée ayant une teneur en vapeur d'eau dans la plage de 0-100 g/m³, de préférence 5-20 g/m³, où l'exposition à la vapeur d'eau est effectuée pendant 1-200 heures, de préférence pendant 40-50 heures, et l'exposition à la vapeur d'eau est effectuée à une température allant de -50°C à +100°C, de préférence à 20-30°C.

7. Procédé de synthèse d'hydrates selon la revendication 5, **caractérisé en ce qu'**on utilise de l'eau liquide finement dispersée.

8. Procédé de synthèse d'hydrates selon la revendication 5, **caractérisé en ce qu'**on utilise de la glace, dans lequel le mélange de sel d'argent(II) avec de la glace est broyé mécaniquement dans un rapport stœchiométrique approprié, puis chauffé lentement à une température supérieure à 0°C, sauf si le sel est décomposé à une température supérieure à 0°C.

9. Procédé de synthèse d'hydrates selon la revendication 5, **caractérisé en ce que** l'on utilise les sels d'argent(II) ou les sels d'argent(I/II) de valence mixte obtenus par procédé électrochimique selon les revendications 1 à 4, c'est-à-dire nitrate(V) d'argent(II), nitrate(V) d'argent(I/II), métaphosphate(V) d'argent(II), métaphosphate(V) d'argent(I/II), orthophosphate(V) d'argent(I/II), ortophosphate(V) d'argent(II), sulfate d'argent(I/II), sulfate d'argent(II), sélénate(V) d'argent(I/II), sélénate(V) d'argent(II), chlorate(VII) d'argent(I/II), chlorate(VII) d'argent(II), bromate(VII) d'argent(I/II), bromate(VII) d'argent(II), iodate(VII) d'argent(I/II), iodate(VII) d'argent(II), fluorosulfate(VI) d'argent(I/II), fluorosulfate(VI) d'argent(II), difluoroortophosphate(V) d'argent(I/II), difluoroortophosphate(V) d'argent(II), fluorosélénate(VI) d'argent(I/II), fluorosélénate(VI) d'argent(II), trifluoroacétate d'argent(I/II), trifluoroacétate d'argent(II), trifluorométhanate (triflate) d'argent(I/II), trifluorométhanate (triflate) d'argent(II), pentafluorooxotellurate(VI) (teflate) d'argent(I/II), pentafluoroxotellurate(VI) (teflate) d'argent(II), perfluorobenzènesulfonate d'argent(I/II), perfluorobenzènesulfonate d'argent(II), perfluoronaphtalènesulfonate d'argent(I/II) , perfluoronaphtalènesulfonate d'argent(II), méthanesulfonate d'argent(I/II), méthanesulfonate d'argent(II), benzènesulfonate d'argent(I/II), benzènesulfonate d'argent(II), naphtalènesulfonate d'argent(I/II), naphtalènesulfonate d'argent(II), et les sels d'argent(II) et d'argent(I/II) des acides perfluorosulfoniques et sulfoniques supérieurs CₙF₂ₙ₊₁SO₃H, CₙH₂ₙ₊₁SO₃H, ou Nafion^{®} ou leurs dérivés, et similaires, et les sels d'argent(II) de (CF₃)₂POOH et les sels d'argent(I/II) de (CF₃)₂POOH.

10. Les sels d'argent(II) hydratés choisis dans le groupe comprenant: nitrate(V) d'argent(II) hydraté, nitrate(V) d'argent(I/II) hydraté, métaphosphate(V) d'argent(II) hydraté, métaphosphate(V) d'argent(I/II) hydraté, orthophosphate(V) d'argent(I/II) hydraté, orthophosphate(V) d'argent(II) hydraté, sulfate d'argent(I/II) hydraté, sulfate d'argent(II)hydraté, sélénate(V) d'argent(I/II) hydraté, sélénate(V) d'argent(II) hydraté, chlorate(VII) d'argent(I/II) hydraté, chlorate(VII) d'argent(II)hydraté, bromate(VII) d'argent(I/II) hydraté, bromate(VII) d'argent(II) hydraté, iodate(VII) d'argent(I/II) hydraté, iodate(VII) d'argent(II) hydraté, fluorosulfate(VI) d'argent(I/II) hydraté, fluorosulfate(VI) d'argent(II) hydraté, difluoroortophosphate(V) d'argent(I/II) hydraté, difluoroortophosphate(V) d'argent(II) hydraté, fluorosélénate(VI) d'argent(I/II) hydraté, fluorosélénate(VI) d'argent(II) hydraté, trifluoroacétate d'argent(I/II) hydraté, trifluoroacétate d'argent(II) hydraté, trifluorométhanate d'argent(I/II) hydraté (triflate), trifluorométhanate d'argent(II) hydraté (triflate), pentafluorooxotellurate(VI) d'argent(I/II) hydraté (téflate), pentafluoroxotellurate(VI) d'argent(II) hydraté (téflate), perfluorobenzènesulfonate d'argent(I/II) hydraté, perfluorobenzènesulfonate d'argent(II) hydraté, perfluoronaphtalènesulfonate d'argent(I/II) hydraté, perfluoronaphtalènesulfonate d'argent(II) hydraté, méthanesulfonate d'argent(I/II) hydraté, méthanesulfonate d'argent(II) hydraté, benzènesulfonate d'argent(I/II) hydraté, benzènesulfonate d'argent(II) hydraté, naphtalènesulfonate d'argent(I/II) hydraté, naphtalènesulfonate d'argent(II) hydraté et hydrates de sels d'argent(II) et d'argent(I/II) des acides perfluorosulfoniques et sulfoniques supérieurs CₙF₂ₙ₊₁SO₃H, CₙH₂ₙ₊₁SO₃H , ou Nafion^{®} ou ses dérivés, et hydrate de sel d'argent(II) de (CF₃)₂POOH et hydrate de sel d'argent (I/II) de (CF₃)₂POOH.

11. Procédé de modification d'une structure de molécules de composés organiques à l'aide d'un agent oxydant et se déroulant en milieu solide, liquide ou gazeux, notamment en milieu organique, **caractérisé en ce qu'**en tant qu'agent d'amorçage oxydant dans la réaction directe d'isomérisation, de déshydrogénation, craquage et/ou couplage des molécules modifiées, on utilise un réactif redox, lequel réactif comprend au moins un composé d'argent(II), et partant de la structure et/ou des groupements fonctionnels existants des molécules à modifier et évitant leur fonctionnalisation préalable, traitement et/ou activation tout en préservant les groupes fonctionnels existants, dans lequel les processus ont lieu séparément, simultanément et/ou séquentiellement, et/ou le réactif redox est utilisé dans un rapport molaire allant de 0,01/1,0 à 10,0/1,0 par rapport à les composés organiques conjugués, par rapport à la teneur molaire en argent(II), de préférence dans un rapport molaire de 0,5/1,0 à 2,0/1,0, et/ou comme le milieu réactionnel on utilise directement un réactif organique gazeux ou liquide, ou une solution du réactif organique dans un solvant organique ou un mélange de solvants organiques, de préférence un mélange monophasique (gaz ou liquide), un mélange multiphasique, une émulsion ou un aérosol, dans lequel les solvants organiques sont des hydrocarbures (aliphatiques, cycliques et aromatiques), des hydrocarbures fluorés (aliphatiques, cycliques et aromatiques), des hydrocarbures perfluorés (aliphatiques, alkylcycliques et aromatiques), des alcools fluorés (primaires, secondaires et tertiaires), des alcools perfluorés (primaires, secondaires et tertiaires), des fluoroamines (primaires, secondaires et tertiaires), perfluoroamines (primaires, secondaires et tertiaires), fluoroesters (aliphatiques, alkylcycliques et aromatiques), perfluoroesters (aliphatiques, alkylcycliques et aromatiques), fluoroéthers (aliphatiques, alkylcycliques et aromatiques), perfluoroéthers (aliphatiques, alkylcycliques et aromatiques ), dérivés halogénés d'alcanes, liquides ioniques fluorés, liquides ioniques perfluorés, acide sulfurique(VI), oléum ou autres acides des mêmes oxoanions et fluoroxoanions comme le sel d'argent(II) utilisé, et des mélanges monophasiques, multiphasiques ou des émulsions de ceux-ci, de préférence l'hexafluoroisopropanol, le nonafluorotertbutanol, le cyclopentane, le n-pentane, le cyclohexane, le n-hexane, le dichlorométhane et leurs mélanges avec d'autres solvants.

12. Procédé de modification d'une structure de molécules de composés organiques selon la revendication 11, **caractérisé en ce que** le procédé est mis en œuvre en l'absence d'oxygène, de préférence sous atmosphère d'azote ou d'argon, ou sous vide, et/ou à des températures de 200 -400 K, de préférence 270-350 K, et de préférence à température ambiante, et/ou dans l'appareil d'un matériau inerte vis-à-vis des composés d'argent(II), de préférence dans la verrerie, l'appareil du quartz, appareil en fluoropolymères , en acier inoxydable, ou dans l'appareil stratifié avec du verre, du quartz, des fluoropolymères ou de l'acier inoxydable, et/ou en utilisant au moins l'un des éléments suivants: un agitateur mécanique ou magnétique, une sonication, une accélération micro-onde et/ou une irradiation UV.

13. Procédé de modification d'une structure de molécules de composés organiques selon la revendication 11, **caractérisé en ce qu'**on utilise l'acide de Lewis, de préférence BF₃-O(C₂H₅)₂, dans lequel le réactif redox comprenant un composé d'argent(II) est dans le même phase en tant que réactif organique, ou le réactif redox comprenant un composé d'argent(II) est dans une phase différente de celle du réactif organique et la réaction chimique a lieu à l'interface.

14. Procédé de modification d'une structure de molécules de composés organiques selon les revendications 11 à 13, **caractérisé en ce que** comme la composé d'argent(II) on utilise des sels d'argent(II) ou d'argent de valence mixte(I/II) comprenant des oxoanions ou des oxofluoroanions, de préférence des sels d'argent(II), en particulier: nitrate(V) d'argent(II), nitrate(V) d'argent(I/II), métaphosphate(V) d'argent(II), métaphosphate(V) d'argent(I/II), orthophosphate(V) d'argent(I/II), orthophosphate(V) d'argent(II), sulfate d'argent(I/II), sulfate d'argent(II), sélénate(V) d'argent(I/II), sélénate(V) d'argent(II), chlorate(VII) d'argent(I/II), chlorate(VII) d'argent(II), bromate(VII) d'argent(I/II), bromate(VII) d'argent(II), iodate(VII) d'argent(I/II), iodate(VII) d'argent(II), fluorosulfate(VI) d'argent(I/II), fluorosulfate(VI) d'argent(II), difluoroortophosphate(V) d'argent(I/II), difluoroortophosphate (V) d'argent(II), fluorosélénate(VI) d'argent(I/II), fluorosélénate(VI) d'argent(II), trifluoroacétate d'argent(I/II), trifluoroacétate d'argent(II), trifluorométhanesulfonate d'argent(I/II) (triflate), trifluorométhanesulfonate d'argent(II) (triflate), pentafluorooxotellurate(VI) (teflate) d'argent(I/II), pentafluoroxotellurate(VI) (teflate) d'argent(II), perfluorobenzènesulfonate d'argent(I/II), perfluorobenzènesulfonate d'argent(II), perfluoronaphtalènesulfonate d'argent(I/II), perfluoronaphtalènesulfonate d'argent(II), méthanesulfonate d'argent(I/II), méthanesulfonate d'argent(II), benzènesulfonate d'argent(I/II), benzènesulfonate d'argent(II), naphtalènesulfonate d'argent(I/II), naphtalènesulfonate d'argent(II) et les sels d'argent(II) et d'argent(I/II) des acides perfluorosulfoniques et sulfoniques supérieurs CₙF₂ₙ₊₁SO₃H, CₙH₂ₙ₊₁SO₃H, ou Nafion^{®} ou leurs dérivés, et les sels d'argent(II) de (CF₃)₂POOH et les sels d'argent(I/II) de (CF₃)₂POOH ou les hydrates de ces composés, de préférence le trifluorométanesulfonate (VI) d'argent(II) (triflate), le fluorosulfate (VI) d'argent(II), le fluorosulfate(VI) d'argent(I/II), le sulfate(VI) d'argent(II) et leurs hydrates, et/ou comme composé d'argent(II) on utilise une solution d'un sel d'argent(II), de préférence de l'hydrogénosulfate(VI) d'argent(II) dissous dans une solution d'acide sulfurique(VI) ou d'oléum ou une solution contenant des ions d'argent(II) générés in situ par voie chimique ou électrochimique à partir de précurseurs appropriés directement dans le milieu réactionnel.

15. Utilisation de sels d'argent (II) comme réactifs redox dans le procédé de modification d'une structure de composés organiques tel que décrit dans les revendications 11 à 14, de préférence dans laquelle les composés organiques à modifier sont des substances organiques, de déchets, dangereux et/ou toxiques dont il faut éliminer, et/ou les composés solides d'argent(II) ou leur solution dans des acides concentrés sont utilisés.
